# FASCICULE DE BREVET EUROPEEN

(11) **EP 1 268 616 B1**
(45) Date de publication et mention de la délivrance du brevet: **25.10.2006**
(21) Numéro de dépôt: 01907801.3
(22) Date de dépôt: 14.02.2001
(51) Int. Cl.: C08J 3/22

(54) **CONCENTRES DE CHARGES UTILISABLES DANS LES THERMOPLASTIQUES**
IN THERMOPLASTEN VERWENDBARE FÜLLSTOFFKONZENTRATE
FILLER CONCENTRATES FOR USE IN THERMOPLASTIC MATERIALS

(30) Priorité: 14.02.2000 FR 0001788
(43) Date de publication de la demande: 02.01.2003
(60) Demande divisionnaire: 06016516.4
(73) Titulaire: OMYA DEVELOPMENT AG, 4665 Oftringen (CH)
(72) Inventeur: BLANCHARD, Pierre, F-01600 Reyrieux (FR); HUSSON, Maurice, F-51000 Chalons en Champagne (FR)
(74) Mandataire: Richebourg, Michel François
(86) Numéro de dépôt international: PCT/FR2001/000441
(87) Numéro de publication internationale: WO 2001/058988

(56) Documents cités:
- EP-A- 0 203 017
- FR-A- 2 346 390
- JP-A- 10 001 572
- US-A- 3 767 444
- US-A- 4 004 940

## Description

L'invention concerne l'utilisation de polypropylènes isotactiques de très grande fluidité pour la préparation de concentrés de charges utilisables dans les thermoplastiques de type oléfinique tels que le polypropylène, le polyéthylène et en règle générale : les polymères utilisés seuls ou en mélange, à base de monomères éthyléniques contenant 2 à 6 atomes de carbone polymérisés seuls ou en mélange.

Ces polypropylènes isotactiques de grande fluidité sont utilisés dans l'invention comme vecteur favorisant la dispersion ou la redispersion de matières minérales utilisées comme charges dans les polyoléfines.

L'invention concerne aussi les concentrés de charges préparés à partir de polypropylènes isotactiques de très grande fluidité.

L'invention concerne enfin les matières thermoplastiques chargées obtenues avec adjonction des polypropylènes sélectionnés selon l'invention, et les produits industriels fabriqués à partir, ou contenant, de telles matières thermoplastiques.

Il est connu d'utiliser des copolymères fluides pour la préparation de mélanges maîtres chargés, à haute concentration en charge(s), c'est-à-dire jusqu'à des taux de l'ordre de 90 % de carbonate de calcium ou/et de talc. Ces copolymères sont généralement des copolymères de l'éthylène, du propylène et quelques fois du butylène. Ils sont commercialisés sous le nom de VESTOPLAST™ par la Société Degussa-Hüls, ou de REXTAC™ par la Société Huntsman. Certains utilisent même des polypropylènes atactiques sous-produits issus de la production du polypropylène isotactique tels que notamment le polypropylène ALPHAMIN STH-L de la société Alphamin.

On connaît aussi le produit décrit dans le brevet WO 95/17441, qui consiste en un polypropylène amorphe.

Ces polymères précités de l'art antérieur sont des produits de spécialité, c'est à dire fabriqués en faibles quantités par des procédés spécifiques et donc onéreux, et dont par ailleurs le manque de dureté et les propriétés collantes (appréciées dans l'industrie des colles fusibles ou « hot-melts ») sont néfastes à l'application précitée.

De plus, ils détériorent les propriétés mécaniques finales dans les objets moulés, ou extrudés, produits à partir des mélanges maîtres les contenant.

Enfin, ils ont des points de ramollissement (environ 130 - 150°C) éloignés de la température à laquelle ils sont utilisés (polypropylène 230°C, polyéthylène 190°C). Ces différences de température entraînent des phénomènes indésirables tels que par exemple le «plate-out» ou dépôt à la filière bien connu de l'homme du métier en extrusion de profilés ou de films.

Le problème technique posé est double ; il s'agissait de sélectionner des polymères pouvant conduire à des concentrations très élevées de charges dans les mélanges maîtres, redispersables dans les différentes matrices polymériques utilisées dans l'industrie du plastique et ne dégradant pas les propriétés mécaniques des produits industriels obtenus au final après redilution, voire les augmentant.

Alors que l'art antérieur propose des mélanges maîtres préparés avec des copolymères de l'éthylène, du propylène et quelques fois du butylène, ou encore des polypropylènes atactiques (amorphes), l'invention propose l'utilisation de polypropylènes isotactiques, donc cristallins, de très grande fluidité, pour la préparation de concentrés de charges utilisables dans les thermoplastiques de type oléfinique.

On sait aujourd'hui utiliser des polymères de pourcentage de cristallinité supérieur à environ 50 %, de type polypropylène ou autre, pour une teneur en charges du mélange maître qui peut atteindre 80 %, mais ces produits sont très limités en fluidité, avec un indice de fluidité, encore dénommé MFI (Melt Flow Index), inférieur à environ 200 g/10 min (190°C - 10 kg - 1,05 mm) selon la norme NF T 51-620 modifiée.

Selon la norme NF T 51-620, l'indice de fluidité, encore dénommé MFI dans le reste de la demande, est la quantité de polymère et/ou copolymère, exprimée en grammes pour 10 minutes, qui s'écoule à une température choisie dans l'intervalle limité par des températures de ramollissement et de transformation sous une charge donnée normalisée (2,16 kg, 5 kg, 10 kg, 21,6 kg) au travers d'une filière de diamètre déterminé (2,09 mm à 2,10 mm) pendant un temps mesuré.

Dans la présente demande, la norme NF T 51-620 modifiée met en oeuvre, pour un polypropylène, une filière de diamètre égal à 1,05 mm et une température de 190°C.

Les machines existantes sont d'ailleurs adaptées à ce type de produits.

On connaît également le produit, décrit dans le brevet EP 0 203 017 qui a apporté une amélioration notable. L'amélioration provient d'une fluidité très nettement plus élevée, qui est supérieure à un MFI de 200 g/10 min (190°C - 10 kg - 1,05 mm), la concentration en charges étant centrée sur environ 80-90 % dans le mélange maître, et le pourcentage de cristallinité étant délibérément abaissé aux environs de 10 %, c'est à dire un produit amorphe.

On connaît également le produit décrit dans le brevet WO 95/17441, déjà mentionné ci-dessus, qui présente les inconvénients de conduire à des objets plastiques manquant de rigidité, en raison de problèmes apportés par la résine employée qui est collante et difficilement manipulable.

L'état récent de la technique (EP 0 203 017, WO 95/17441) suggère donc à l'homme du métier que, pour améliorer fortement la fluidité, ce qui est un impératif pour les produits modernes, tout en conservant la caractéristique, également essentielle, de forte concentration en charge(s) dans le mélange maître, il convient de réduire fortement la cristallinité.

On a aussi proposé (US 4,455,344) de préparer des granulés contenant :
a) de 60 à 80 parties en poids d'une charge minérale de dimension moyenne comprise entre 0,05 et 100 µm,
b) de 5 à 35 parties en poids d'une polyoléfine cristalline de dimension moyenne comprise entre 150 et 1000 µm,
c) et de 5 à 35 parties en poids d'un agent liant ayant un point de fusion inférieur d'au moins 10°C à celui de la polyoléfine cristalline.

Pour aboutir à de tels granulés, le procédé proposé par cet art antérieur consiste à recouvrir la polyoléfine cristalline et/ou les particules de la charge minérale au moyen de l'agent liant qui constitue une enveloppe assurant l'adhérence des particules entre elles. Un tel procédé ne conduit pas à la production d'un mélange pâteux cohérent, c'est-à-dire de même composition dans la totalité du mélange à la température de réalisation mais à l'obtention d'agglomérats incohérents, c'est-à-dire de composition généralement différente de l'un à l'autre et de dimensions irrégulières entraînant ultérieurement une mauvaise redispersion.

C'est d'ailleurs sans doute la raison pour laquelle, dans l'art antérieur, sont commercialisés des produits amorphes. De tels produits totalement amorphes sont plus facilement obtenus en recourant à des co- ou terpolymères, qui posent alors, comme certains produits antérieurs de très faible cristallinité, des problèmes de compatibilité avec les polyoléfines. Ces résines sont plus fluides à l'état fondu et leurs granulés ou agglomérats collent à l'état de présentation à froid et gênent donc considérablement leur manipulation et leur dosage.

Comme on le verra dans la description qui va suivre, l'invention est tout au contraire parvenue à sélectionner des polymères de type polypropylène isotactique, de fluidité élevée et supérieure ou égale à un MFI de 200 g/10 min, mesuré suivant la norme modifiée NF T 51-620 (190°C - 10 kg - 1,05 mm), de préférence supérieure à 500 g/10 min, mesuré suivant la norme modifiée NF T 51-620 (190°C - 10 kg - 1,05 mm), avec un pourcentage de cristallinité supérieur à environ 20 %, préférentiellement compris entre 30 % et 90 %, préférentiellement entre 50 % et 85 %, et conduisant à un mélange-maître de caractéristiques à la fois remarquables et surprenantes, c'est à dire :
- contenant une teneur en charges supérieure à 80 %,
- possédant une fluidité élevée, c'est à dire de MFI supérieur ou égal à 5 g/10 min (190°C - 5 kg - 2,09 mm) mesuré selon la norme NF T 51-620, de préférence supérieur ou égal à 8 g/10 min (190°C - 5 kg - 2,09 mm), et
- contenant au moins un polymère de type polypropylène isotactique présentant un pourcentage de cristallinité (appelé aussi indice d'isotacticité) supérieur à environ 20 %, préférentiellement compris entre 30 % et 90 %, très préférentiellement compris entre 50 % et 85 %, ce qui est donc l'inverse de la démarche de l'art antérieur.

Cet indice d'isotacticité représente, pour une température supérieure à 140°C, une énergie de fusion comprise entre 40 J/g et 138 J/g, telle que décrit par Kenji Kamide et Keiko Yamaguchi dans « Die Makromolekulare Chemie » (1972) Tome 162, page 222.

En effet, ce pourcentage de cristallinité ou indice d'isotacticité est déterminé, dans toute la présente demande, par la mise en oeuvre d'une méthode calorimétrique différentielle dite méthode DSC (Differential Scanning Calorimetry) à l'aide d'un appareil DSC 20 de la société Mettler-Toledo qui permet de mesurer l'énergie de fusion de chaque polymère et de déterminer l'indice par comparaison avec la valeur de 138 J/g qui correspond à un indice de 100 %. Cette méthode de détermination du pourcentage de cristallinité ou indice d'isotacticité sera appelée méthode DSC dans toute la suite de la présente demande.

En outre, ces mélange-maîtres permettent de maîtriser la dureté des grains, propriété jusque-là difficile à obtenir.

D'autres caractéristiques et avantages de l'invention seront mieux compris à la lecture de la description qui va suivre.

Il est bon de préciser que dans toute la présente demande, «polypropylène isotactique» désignera des polypropylènes isotactiques comportant un très faible pourcentage, inévitable et connu de l'homme du métier, de polymère ou partie de polymère atactique.

Ces polypropylènes isotactiques à très grande fluidité sont par ailleurs préparés par des méthodes classiques de polymérisation (EP 0 523 717 ou EP 0 600 461).

L'homme du métier comprendra que ces polymères soumis à une dégradation faisant intervenir une réaction radicalaire sont à considérer comme des équivalents techniques.

Ils sont caractérisés par leur fluidité ou MFI, mesuré suivant la norme modifiée NF T 51-620, qui est supérieure ou égale à 200 g/10 min. (température 190°C, charge 10 kg, filière de 1,05 mm) et par leur pourcentage de cristallinité supérieur à environ 30 %, mesuré par la méthode DSC.

L'une des caractéristiques de l'invention est donc également d'utiliser ces polypropylènes isotactiques obtenus par polymérisation directe. Ceci représente un avantage important voire décisif, car cette technique permet d'éviter les produits de recyclage ou les sous produits de polymérisation qui sont souvent la cause de la dégradation des propriétés mécaniques finales et des fluctuations de qualité difficilement industrialisables.

Un autre avantage décisif de l'invention est de permettre à l'homme du métier de concevoir, avec un très grand degré de liberté, exactement le produit dont il a besoin pour l'application précise considérée et/ou pour tenir compte des équipements industriels pré-existants. Cette faculté est offerte, comme on le verra ci-dessous, par la possibilité de conserver les avantages de l'invention tout en ajustant le degré de cristallinité et de dureté.

La présente invention concerne donc un procédé pour la préparation de mélanges maîtres ou concentrés de charges minérales fortement chargés en matières minérales, utilisables pour charger des matières thermoplastiques à l'aide desdites charges minérales, mettant en oeuvre des polymères ou des mélanges de polymères comme liant, caractérisé en ce que lesdits polymères ou mélanges de polymères :
- comprennent au moins un polypropylène isotactique de très grande fluidité, et
- ont un pourcentage de cristallinité communément appelé indice d'isotacticité supérieur à environ 20 %, préférentiellement compris entre 30 % et 90 %, très préférentiellement compris entre 50 % et 85 %, mesuré par la méthode DSC telle que précédemment décrite.

De plus, nous préciserons, pour la bonne compréhension des termes utilisés, les définitions relatives à l'isotacticité, aux polymères atactiques et syndiotactiques.

Ainsi l'isotacticité caractérise, dans un polymère oléfinique, la présence des substituants sur un seul côté du squelette carboné de la molécule alors qu'au contraire, un polymère atactique voit ses substituants répartis de manière aléatoire sur les deux côtés.

Un polymère syndiotactique présente quant à lui des séquences alternées de substituants, de chaque côté. Ces notions sont tout à fait familières pour l'homme du métier, mais l'on pourra se référer néanmoins à l'ouvrage Chimie Organique d'Allinger-Cava-Johnson- De Jongh-Lebel-Stevens (McGraw-Hill) 25.4, Stéréochimie des polymères, Polymères synthétiques, figure 25.1.

On pourra aussi se référer pour les généralités sur ce domaine, notamment en ce qui concerne les Tg (température de transition vitreuse) et les Tm (point de fusion) à l'article du Laboratoire des Hauts Polymères, Univ. Cath. de Louvain, France, avril 1990, et aux Techniques de l'Ingénieur, Monographies, polypropylènes, A 3 320.

Selon un mode de réalisation préféré, l'invention se caractérise en ce que le pourcentage de cristallinité du polymère ou desdits mélanges de polymère est compris entre 50 et 85 %, mesuré par la méthode DSC telle que précédemment décrite.

Selon un mode de réalisation préféré, ledit liant polymère ou mélange de polymères qui présente un MFI supérieur ou égal à 200 g/10 min, mesuré suivant la norme modifiée NF T 51-620 (190°C - 10 kg - 1,05 mm), présente un indice de fluidité supérieur à 500 g/10 min, mesuré suivant la norme modifiée NF T 51-620 (190°C - 10 kg - 1,05 mm).

Selon encore un mode de réalisation particulier, l'invention se caractérise en ce que ledit polymère est un polypropylène isotactique.

Selon encore un mode de réalisation particulier, l'invention se caractérise en ce que l'on utilise un mélange d'au moins un polypropylène isotactique et d'au moins un autre polymère oléfinique cristallin ou amorphe.

Selon encore un mode de réalisation particulier, l'invention se caractérise en ce que l'on utilise un mélange d'au moins un polypropylène isotactique et d'au moins un polyéthylène.

Selon encore un mode de réalisation particulier, l'invention se caractérise en ce que l'on utilise un mélange d'un polypropylène isotactique et d'un polymère oléfinique cristallin comme un polyéthylène.

Selon encore un mode de réalisation particulier, l'invention se caractérise en ce que l'on utilise un mélange d'au moins un polypropylène isotactique et d'au moins un polymère ou co-ou terpolymère oléfinique amorphe ou sensiblement amorphe. On rappellera que «copolymère » désigne aussi bien des polymères obtenus à partir de deux, trois, quatre, monomères ou plus, dont les terpolymères ne sont qu'un cas particulier. Par « sensiblement amorphe » on désignera des polymères ou copolymères dont le degré de cristallinité est très faible, de l'ordre de moins de 10 ou de moins de 5 %.

Selon encore un mode de réalisation particulier, l'invention se caractérise en ce que l'on utilise un mélange d'au moins un polypropylène isotactique et d'au moins un polymère ou copolymère oléfinique atactique ou sensiblement atactique.

Selon un mode de mise en oeuvre particulier et non limitatif, la partie organique du concentré de charges, c'est à dire le mélange de polymères formant le liant et éventuellement les additifs usuels, est composée :
- de 30 % à 100 % de polypropylène isotactique de très grande fluidité dont le MFI mesuré suivant la norme modifiée NFT 51-620 est supérieur ou égal à 200 g /10 min. (température 190°C, charge 10 kg, filière de 1,05 mm) ;
- de 0 à 70 % de polyoléfines amorphes et/ou cristallines standards tels que le polypropylène, le polyéthylène et en règle générale les polymères et copolymères à base de monomères éthyléniques contenant 2 à 6 atomes de carbone seuls ou en mélange ;
- de 0 à 5 % d'additifs tels que des stabilisants thermiques, des antioxydants, des anti-UV, des dispersants, des lubrifiants, des colorants, des plastifiants, des antistatiques,des ignifugeants, des agents de nucléation bien connus de l'homme de l'art, des agents passivant les métaux comme par exemple les agents cupropassifs et autres.

Selon un mode de réalisation préféré, on utilisera des polypropylènes isotactiques préparés par polymérisation directe.

L'invention concerne également les mélange-maîtres obtenus par ledit procédé.

Les mélange-maîtres selon l'invention se caractérisent en ce qu'ils contiennent une teneur en charges minérales supérieure à 80 % en poids, préférentiellement de 80,5 % à 95,0 % et très préférentiellement de 82,0 % à 93,0 %, en ce qu'ils possèdent une fluidité ou MFI supérieur ou égal à 5 g/10 min (190°C - 5 kg - 2,09 mm) mesuré selon la norme NF T 51-620, de préférence supérieur ou égal à 8 g/10 min (190°C - 5 kg -2,09 mm), et en ce qu'ils contiennent au moins un polymère de type polypropylène isotactique présentant un pourcentage de cristallinité (appelé aussi indice d'isotacticité) supérieur à environ 20 %, préférentiellement compris entre 30 % et 90 %, très préférentiellement compris entre 50 % et 85 %, mesuré par la méthode DSC telle que précédemment décrite.

Selon encore un mode de réalisation particulier, l'invention se caractérise en ce que la ou les charge(s) minérales sont choisies parmi les carbonates tels que les carbonates de calcium naturel dont notamment les différentes craies, calcites, marbres ou encore parmi les carbonates synthétiques tels que les carbonates de calcium précipité à différents stades de cristallisation ou encore sont choisies parmi les sels mixtes de magnésium et de calcium tels que les dolomies ou encore parmi le carbonate de magnésium, le carbonate de zinc, la chaux, la magnésie, le sulfate de baryum tel que notamment la baryte, le sulfate de calcium, la silice, les silico-magnésiens tels que le talc, la wollastonite, les argiles et autres silico-alumineux tels que les kaolins, le mica, les oxydes ou hydroxydes de métaux ou d'alcalino-terreux tels que l'hydroxyde de magnésium, les oxydes de fer, l'oxyde de zinc, la fibre ou la poudre de verre, la fibre ou de poudre de bois, les pigments minéraux ou organiques ou les mélanges de ces composés, notamment les mélanges de talc et de carbonates ou encore les mélanges d'oxyde de titane et de carbonates, mélanges effectués avant ou après le broyage des minéraux.

Ces charges peuvent être éventuellement traitées avant leur mise en oeuvre par un ou plusieurs agents dont notamment l'acide céthylique, l'acide stéarique, l'acide béhénique, les mélanges des dits acides avec leurs sels de calcium ou de zinc, les phosphates, les phosphonates, les sulfates et les sulfonates organiques.

De manière encore plus particulière, ces charges sont choisies parmi les carbonates préalablement traités ou non tels que les carbonates de calcium naturel dont les différentes craies, calcites, marbres ou parmi les carbonates synthétiques tels que les carbonates de calcium précipité, ou encore parmi le talc, l'hydroxyde de magnésium, la baryte, le dioxyde de titane, la wollastonite ou les dolomies et leurs mélanges.

Des exemples de nature de charges sont décrits de manière détaillée dans, par exemple, le brevet EP 0 203 017 ou encore des exemples de forme et taille de particules sont précisés dans, par exemple, la demande de brevet WO 95/17441 et sont de toute manière très bien connus de l'homme du métier.

L'invention concerne également un procédé pour préparer des concentrés de charges selon l'invention, caractérisé en ce que l'on effectue un mélange, en une ou plusieurs fois, de la masse de charge(s) et du polymère ou du mélange de polymères selon l'invention, et en ce que le concentré peut contenir plus de 80 % en poids de charge(s), en particulier de 80 % à 95 % et très préférentiellement de 82 % à 93 %.

L'invention concerne encore un procédé pour préparer des matières thermoplastiques chargées à l'aide de charge(s) minérale(s) caractérisé en ce que l'on procède au mélange de ladite ou desdites matières thermoplastiques avec un mélange-maître encore appelé concentré de charge(s) préparé selon l'invention.

Ces matières thermoplastiques mises en oeuvre avec le mélange-maître selon l'invention sont choisies parmi les polyéthylènes basse densité, linéaires ou ramifiés, ou les polyéthylènes haute densité, les polypropylènes homo- ou copolymères, les polyisobutylènes et les copolymères obtenus lors de la polymérisation de deux au moins des co-monomères éthylène, propylène, isobutylène, les polyoléfines modifiées par greffage telles que les polyoléfines greffées anhydride maléique ou par copolymérisation comme par exemple les polyoléfines halogénées, les polypropylènes modifiés EPDM (éthylène, propylène, diène, monomère), les polypropylènes modifiés SEBS (styrène, éthylène, butylène, styrène) ou encore de deux au moins des polymères et copolymères précités, en mélange, ou encore les caoutchoucs ou élastomères naturels ou synthétiques et thermoplastiques, parmi ces derniers notamment les caoutchoucs SBR (caoutchouc styrène-butadiène) ou EPDM ou SEBS thermoplastiques.

On pourra incorporer selon ce procédé des additifs usuels bien connus de l'homme du métier, adaptés aux applications finales.

invention concerne enfin les utilisations de ces mélange-maîtres, éventuellement sous forme d'agrégats ou de granulés, pour fabriquer des articles industriels, notamment des articles industriels moulés ainsi que les objets moulés obtenus.

Les modes de transformation de ces mélange-maîtres peuvent être également l'extrusion et notamment l'extrusion d'un film, d'un film microporeux, d'une gaine ou d'un tube ou d'un profilé, l'extrusion soufflage, l'extrusion de bandelettes ou de feuilles ou encore l'extrusion couchage sur papier ou feuille métallique, ou encore peuvent être le thermoformage, l'injection, le calandrage, la fabrication de fils et de câbles et autres modes connus de l'homme du métier.

La portée et l'intérêt de l'invention seront mieux perçus et illustrés par les exemples non limitatifs qui vont suivre.

### EXEMPLE 1

Cet exemple concerne la mise en oeuvre de la sélection des polymères selon l'invention permettant l'obtention de mélange-maîtres qui contiennent une teneur en charge supérieure à 80 %, qui possèdent une fluidité élevée, c'est-à-dire de MFI supérieur ou égal à 5 g/10 min (190°C - 5 kg - 2,09 mm) mesuré selon la norme NF T 51-620 et qui contiennent au moins un polymère de type polypropylène isotactique présentant un pourcentage de cristallinité (appelé aussi indice d'isotacticité) supérieur à environ 20 %, préférentiellement compris entre 30 % et 90 %, très préférentiellement compris entre 50 % et 85 %, mesuré par la méthode DSC telle que précédemment décrite.

Dans ce but, pour chacun des essais n° 1 à 15, 600 g de concentrés de charge ont été préparés dans un mélangeur à bras en Z de type GUTTTARD™, par mélange de la résine sélectionnée avec la charge et les divers autres additifs ajoutés simultanément, la vitesse de mélange étant de 76 t/min et la température de 180°C.

Les mélange-maîtres ayant été réalisés en 45 minutes (sauf pour l'essai n° 1), on a procédé à la mesure de la fluidité c'est-à-dire à la mesure de l'indice de fluidité (MFI) des divers essais, selon la norme NF T 51-620, à savoir par l'utilisation d'un plastomètre ZWICK ™ 4105 à une température de 190°C, la masse de poussée étant de 5 kg et la filière ayant un diamètre de 2,09 mm.

### Essai n° 1 :

Cet essai illustre l'art antérieur et met en oeuvre un copolymère isotactique de faible fluidité dans une composition contenant :
- 80,5 % en poids d'une craie de Champagne traitée par de l'acide stéarique de diamètre moyen égal à 2 micromètres ;
- 19,5 % en poids de polypropylène isotactique non fluide, de MFI égal à 9,3 g/10 min. (190°C, 10 kg, 1,05 mm) et commercialisé sous la référence 3120 MN 1 par la société Appryl.

Après 75 minutes de mélange, on a obtenu une composition non homogène d'agrégats et de poudre. La mesure de fluidité est impossible.

### Essai n° 2 :

Cet essai illustre l'art antérieur et met en oeuvre un polymère amorphe dans une composition contenant :
- 88,0 % en poids d'une craie de Champagne dont le diamètre moyen est de 2 micromètres ;
- 11,2 % en poids de copolymère oléfinique, de MFI supérieur à 1150 g/10 min. (190°C, 10 kg, 1,05 mm) et commercialisé sous la référence Vestoplast™ 408 par la société Degussa-Hüls ;
- 0,8 % en poids d'un dispersant du type phosphate d'alcool gras commercialisé par la société Coatex sous la dénomination Coatex DOPP-18.

Le MFI obtenu a une valeur de 21,0 g/10 min. mesuré dans les conditions précitées.

### Essai n° 3 :

Cet essai illustre l'art antérieur et met en oeuvre un polymère amorphe dans une composition contenant :
- 87,5 % en poids d'une craie de Champagne traitée par de l'acide stéarique de diamètre moyen égal à 2 micromètres ;
- 12,5 % en poids de polypropylène atactique issu de la purification d'un polypropylène isotactique, de MFI supérieur à 1150 g/10 min. (190°C, 10 kg, 1,05 mm) et commercialisé sous la référence Alphamin™ STH-L par la société Alphamin.

Le MFI obtenu a une valeur comprise entre 120 g/10 min. et 400 g/10 min. mesuré dans les conditions précitées, et en fonction des lots du polypropylène atactique mis en oeuvre.

### Essai n° 4 :

Cet essai illustre l'art antérieur et met en oeuvre un polymère amorphe dans une composition contenant :
- 87,5 % en poids d'une craie de Champagne traitée par de l'acide stéarique de diamètre moyen égal à 2 micromètres ;
- 12,5 % en poids de polypropylène amorphe, de MFI égal à 450 g/10 min. (190°C, 10 kg, 1,05 mm) commercialisé par la société Huntsman sous la dénomination Rexflex™ WL 125 ;

Le MFI obtenu a une valeur de 10,0 g/10 min. mesuré dans les conditions précitées.

### Essai n° 5 :

Cet essai illustre l'invention et met en oeuvre une composition contenant :
- 87,5 % en poids d'une craie de Champagne traitée par de l'acide stéarique de diamètre moyen égal à 2 micromètres ;
- 12,45 % en poids d'un polymère isotactique de MFI égal à 970 g/10 min. (température 190°C, charge 10 kg, filière de 1,05 mm) obtenu par la dégradation peroxydique à 300°C pendant 15 minutes, d'un mélange de 24,8 % massique de VALTEC HH442H™ commercialisé par la société Montell et de 75,2 % massique d'un polypropylène isotactique de MFI égal à 757 g/10 min. (température 190°C, charge 10 kg, filière de 1,05 mm);
- 0,05 % en poids d'un stabilisant thermique commercialisé sous le nom de Irganox™ 1010 par la société Ciba-Geigy.

Le MFI obtenu a une valeur de 23,0 g/10min. mesuré dans les conditions précitées.

### Essai n° 6 :

Cet essai illustre l'invention et met en oeuvre une composition contenant :
- 87,5 % en poids d'une craie de Champagne traitée par de l'acide stéarique de diamètre moyen égal à 2 micromètres ;
- 12,45 % en poids d'un polymère isotactique de MFI égal à 1150 g/10 min. (température 190°C, charge 10 kg, filière de 1,05 mm) obtenu par la dégradation peroxydique à 300°C pendant 15 minutes, d'un mélange de 50 % massique de VALTEC HH442H™ commercialisé par la société Montell et de 50 % massique d'un polypropylène isotactique de MFI égal à 757 g/10 min. (température 190°C, charge 10 kg, filière de 1,05 mm) ;
- 0,05 % en poids d'un stabilisant thermique commercialisé sous le nom de Irganox™ 1010 par la société Ciba-Geigy.

Le MFI obtenu a une valeur de 30,0 g/10 min. mesuré dans les conditions précitées.

### Essai n° 7 :

Cet essai illustre l'invention et met en oeuvre une composition contenant :
- 87,5 % en poids d'une craie de Champagne traitée par de l'acide stéarique de diamètre moyen égal à 2 micromètres ;
- 12,45 % en poids d'un polypropylène isotactique de MFI égal à 535 g/10 min. (température 190°C, charge 10 kg, filière de 1,05 mm) ;
- 0,05 % en poids d'un stabilisant thermique commercialisé sous le nom de Irganox™ 1010 par la société Ciba-Geigy.

Le MFI obtenu a une valeur de 11,5 g/10min. mesuré dans les conditions précitées.

### Essai n° 8 :

Cet essai illustre l'invention et met en oeuvre une composition contenant :
- 87,5 % en poids d'une craie de Champagne traitée par un mélange acide stéarique-stéarate de calcium de diamètre moyen égal à 2 micromètres ;
- 12,45 % en poids d'un polypropylène isotactique de MFI égal à 632 g/10 min. (température 190°C, charge 10 kg, filière de 1,05 mm) ;
- 0,05 % en poids d'un stabilisant thermique commercialisé sous le nom de Irganox™ 1010 par la société Ciba-Geigy.

Le MFI obtenu a une valeur de 16,4 g/10 min. mesuré dans les conditions précitées.

### Essai n° 9 :

Cet essai illustre l'invention et met en oeuvre une composition contenant :
- 87,5 % en poids d'une craie de Champagne traitée par de l'acide stéarique de diamètre moyen égal à 2 micromètres ;
- 12,45 % en poids d'un polypropylène isotactique de MFI égal à 757 g/10 min. (température 190°C, charge 10 kg, filière de 1,05 mm) ;
- 0,05 % en poids d'un stabilisant thermique commercialisé sous le nom de Irganox™ 1010 par la société Ciba-Geigy.

Le MFI obtenu a une valeur de 18,0 g/10min. mesuré dans les conditions précitées.

### Essai n° 10 :

Cet essai illustre l'invention et met en oeuvre une composition contenant :
- 87,5 % en poids d'une craie de Champagne traitée par de l'acide stéarique de diamètre moyen égal à 2 micromètres ;
- 11,55 % en poids d'un polypropylène isotactique de MFI égal à 757 g/10 min. (température 190°C, charge 10 kg, filière de 1,05 mm) ;
- 0,90 % en poids d'un dispersant du type phosphate d'alcool gras commercialisé par la société Coatex sous la dénommination COATEX DOPP-18 ;
- 0,05 % en poids d'un stabilisant thermique commercialisé sous le nom de Irganox™ 1010 par la société Ciba-Geigy.

Le MFI obtenu a une valeur de 32,0 g/10 min. mesuré dans les conditions précitées.

### Essai n° 11 :

Cet essai illustre l'invention et met en oeuvre une composition contenant :
- 87,5 % en poids d'une craie de Champagne traitée par de l'acide stéarique de diamètre moyen égal à 2 micromètres ;
- 11,55 % en poids d'un polypropylène isotactique de MFI égal à 757 g/10 min. (température 190°C, charge 10 kg, filière de 1,05 mm) ;
- 0,45 % en poids d'un dispersant du type phosphate d'alcool gras commercialisé par la société Coatex sous la dénomination COATEX DOPP-18 ;
- 0,45 % en poids de stéarate de zinc ;
- 0,05 % en poids d'un stabilisant thermique commercialisé sous le nom de Irganox™ 1010 par la société Ciba-Geigy.

Le MFI obtenu a une valeur de 19,0 g/10 min. mesuré dans les conditions précitées.

### Essai n° 12 :

Cet essai illustre l'invention et met en oeuvre une composition contenant :
- 87,5 % en poids d'une craie de Champagne traitée par de l'acide stéarique de diamètre moyen égal à 2 micromètres ;
- 10,0 % en poids d'un polypropylène isotactique de MFI égal à 840 g/10 min. (température 190°C, charge 10 kg, filière de 1,05 mm) ;
- 2,45 % en poids d'un polyéthylène basse densité commercialisé par la société Polimeri Europa sous la dénomination Riblene™ MV 10 ;
- 0,05 % en poids d'un stabilisant thermique commercialisé sous le nom de Irganox™ 1010 par la société Ciba-Geigy.

Le MFI obtenu a une valeur de 26,2 g/10 min. mesuré dans les conditions précitées.

### Essai n° 13 :

Cet essai illustre l'invention et met en oeuvre une composition contenant :
- 87,5 % en poids d'une craie de Champagne traitée par de l'acide stéarique de diamètre moyen égal à 2 micromètres ;
- 12,45 % en poids d'un polypropylène isotactique de MFI égal à 295 g/10 min. (température 190°C, charge 10 kg, filière de 1,05 mm) commercialisé sous le nom de Aldrich 800 par la société Aldrich ;
- 0,05 % en poids d'un stabilisant thermique commercialisé sous le nom de Irganox™ 1010 par la société Ciba-Geigy.

Le MFI obtenu a une valeur de 8,4 g/10 min. mesuré dans les conditions précitées.

### Essai n° 14 :

Cet essai illustre l'invention et met en oeuvre une composition contenant :
- 87,5 % en poids d'une craie de Champagne traitée par de l'acide stéarique de diamètre moyen égal à 2 micromètres ;
- 12,45 % en poids d'un polypropylène isotactique de MFI égal à 1038 g/10 min. (température 190°C, charge 10 kg, filière de 1,05 mm) ;
- 0,05 % en poids d'un stabilisant thermique commercialisé sous le nom de Irganox™ 1010 par la société Ciba-Geigy.

Le MFI obtenu a une valeur de 25,2 g/10 min. mesuré dans les conditions précitées.

### Essai n° 15 :

Cet essai illustre l'invention et met en oeuvre une composition contenant :
- 87,5 % en poids d'une craie de Champagne traitée par de l'acide stéarique de diamètre moyen égal à 2 micromètres ;
- 12,45 % en poids d'un polypropylène isotactique de MFI égal à 200 g/10 min. (température 190°C, charge 10 kg, filière de 1,05 mm) ;
- 0,05 % en poids d'un stabilisant thermique commercialisé sous le nom de Irganox™ 1010 par la société Ciba-Geigy.

Le MFI obtenu a une valeur de 5,0 g/10 min. mesuré dans les conditions précitées.

Tous ces essais et ces mesures de fluidité ayant été effectués, on procède à la mesure de l'indice d'isotacticité selon la méthode DSC précitée.

Les différents résultats obtenus sont rassemblés dans le tableau 1 suivant.

| | Essai n° | % en poids de charge minérale dans mélange-maître | % en poids de polypropylène isotactique dans mélange-maître | MFI (g/10 min) du polypropylène isotactique (190°C/10 kg/1,05 mm) | MFI (g/10 min) du mélange-maître (190°C/5 kg/2,09 mm) | Pourcentage de cristallinité ou indice d'isotacticité du polymère isotactique fluide |
|---|---|---|---|---|---|---|
| Art antérieur | 1 | 80,5 | 19,5 | 9,3 | Mesure impossible | 53,2 |
| Art antérieur | 2 | 88,0 | 0 | - | 21,0 | 0 |
| Art antérieur | 3 | 87,5 | 0 | - | 120 - 400 | 0 |
| Art antérieur | 4 | 87,5 | 0 | 450 | 10,0 | 11,4 |
| Invention | 5 | 87,5 | 12,45 | 970 | 23,0 | 68,0 |
| Invention | 6 | 87,5 | 12,45 | 1150 | 30,0 | 74,6 |
| Invention | 7 | 87,5 | 12,45 | 535 | 11,5 | 68,2 |
| Invention | 8 | 87,5 | 12,45 | 632 | 16,4 | 43,5 |
| Invention | 9 | 87,5 | 12,45 | 757 | 18,0 | 65,0 |
| Invention | 10 | 87,5 | 11,55 | 757 | 32,0 | 65,0 |
| Invention | 11 | 87,5 | 11,55 | 757 | 19,0 | 65,0 |
| Invention | 12 | 87,5 | 10,0 | 840 | 26,2 | 61,6 |
| Invention | 13 | 87,5 | 12,45 | 295 | 8,4 | 68,5 |
| Invention | 14 | 87,5 | 12,45 | 1038 | 25,2 | 77,4 |
| Invention | 15 | 87,5 | 12,45 | 200 | 5,0 | 74,2 |

La lecture du tableau 1 permet de constater que la sélection de polypropylène isotactique, de fluidité élevée et supérieure ou égale à un MFI de 200 g/10 min, mesuré suivant la nonne modifiée NF T 51-620 (190°C - 10 kg - 1,05 mm), de préférence supérieure à 500 g/10 min., mesuré suivant la norme modifiée NF T 51-620 (190°C - 10 kg - 1,05 mm), avec un pourcentage de cristallinité supérieur à environ 20 %, préférentiellement compris entre 30 % et 90 %, très préférentiellement entre 50 % et 85 %, permet l'obtention de mélange-maîtres qui contiennent une teneur en charge égale ou supérieure à 80 %, qui possèdent une fluidité élevée, c'est-à-dire de MFI supérieur ou égal à 5 g/10 min (190°C- 5 kg- 2,09 mm) mesuré selon la norme NF T 51-620 et qui contiennent au moins un polymère de type polypropylène isotactique présentant un pourcentage de cristallinité (appelé aussi indice d'isotacticité) supérieur à environ 20 %, préférentiellement compris entre 30 % et 90 %, très préférentiellement compris entre 50 % et 85 %, mesuré par la méthode DSC telle que précédemment décrite.

### EXEMPLE 2

Cet exemple concerne la mise en oeuvre, selon l'invention, de différentes charges minérales permettant l'obtention de mélange-maîtres qui contiennent une teneur en charge supérieure à 80 %, qui possèdent une fluidité élevée, c'est-à-dire de MFI supérieur ou égal à 5 g/10 min (190°C - 5 kg - 2,09 mm) mesuré selon la norme NF T 51-620 et qui contiennent au moins un polymère de type polypropylène isotactique présentant un pourcentage de cristallinité (appelé aussi indice d'isotacticité) supérieur à environ 20 %, préférentiellement compris entre 30 % et 90 %, très préférentiellement compris entre 50 % et 85 %, mesuré par la méthode DSC telle que précédemment décrite.

Dans ce but, pour chacun des essais n° 16 à 24, 600 g de concentrés de charge ont été préparés dans un mélangeur à bras en Z de type GUITTARD™, par mélange de la résine sélectionnée avec la charge et les divers autres additifs ajoutés simultanément, la vitesse de mélange étant de 76 t/min. et la température de 180°C.

Les mélange-maîtres ayant été réalisés en 45 minutes, on a procédé à la mesure de la fluidité c'est-à-dire à la mesure de l'indice de fluidité (MFI) des divers essais, selon la norme NF T 51-620, à savoir par l'utilisation d'un plastomètre ZWICK™ 4105 à une température de 190°C, la masse de poussée étant de 5 kg et la filière ayant un diamètre de 2,09 mm.

### Essai n° 16 :

Cet essai illustre l'invention et met en oeuvre une composition contenant :
- 41,5 % en poids d'une craie de Champagne traitée par de l'acide stéarique de diamètre moyen égal à 2 micromètres ;
- 41,5 % en poids d'un talc de granulométrie telle que 41 % des particules ont un diamètre inférieur à 5 micromètres ;
- 15,9 % en poids d'un polypropylène isotactique de MFI égal à 840 g/10 min. (température 190°C, charge 10 kg, filière de 1,05 mm) ;
- 1,0 % en poids de stéarate de zinc ;
- 0,1 % en poids d'un stabilisant thermique commercialisé sous le nom de Irganox™ 1010 par la société Ciba-Geigy.

Le MFI obtenu a une valeur de 10,6 g/10 min. mesuré dans les conditions précitées.

### Essai n° 17 :

Cet essai illustre l'invention et met en oeuvre une composition contenant :
- 64,25 % en poids d'une craie de Champagne traitée par de l'acide stéarique de diamètre moyen égal à 2 micromètres ;
- 21,25 % en poids d'un talc de granulométrie telle que 41 % des particules ont un diamètre inférieur à 5 micromètres ;
- 13,9 % en poids d'un polypropylène isotactique de MFI égal à 840 g/10 min. (température 190°C, charge 10 kg, filière de 1,05 mm);
- 0,50 % en poids d'un dispersant du type phosphate d'alcool gras commercialisé par la société Coatex sous la dénomination COATEX DOPP-18 ;
- 0,1 % en poids d'un stabilisant thermique commercialisé sous le nom de Irganox™ 1010 par la société Ciba-Geigy.

Le MFI obtenu a une valeur de 20,7 g/10 min. mesuré dans les conditions précitées.

### Essai n° 18 :

Cet essai illustre l'invention et met en oeuvre une composition contenant :
- 75,0 % en poids d'une craie de Champagne traitée par de l'acide stéarique de diamètre moyen égal à 2 micromètres ;
- 13,0 % en poids d'un hydroxyde de magnésium commercial de diamètre moyen 1,4-1,8 micromètres ;
- 8,9 % en poids d'un polypropylène isotactique de MFI égal à 840 g/10 min. (température 190°C, charge 10 kg, filière de 1,05 mm) et 2,0 % en poids d'un copolymère polypropylène de grade 100 commercialisé par la société Montell sous la dénomination Moplen™ EP-N 31 MA ;
- 1,0 % en poids de cire commercialisée par la société Allied Signal sous la référence PE AC6 ;
- 0,1 % en poids d'un stabilisant thermique commercialisé sous le nom de Irganox™ 1010 par la société Ciba-Geigy.

Le MFI obtenu a une valeur de 14,5 g/10 min. mesuré dans les conditions précitées.

### Essai n° 19 :

Cet essai illustre l'invention et met en oeuvre une composition contenant :
- 87,0 % en poids d'une calcite dont le diamètre moyen est de 1,8 micromètres ;
- 9,9 % en poids d'un polypropylène isotactique de MFI égal à 840 g/10 min. (température 190°C, charge 10 kg, filière de 1,05 mm) et 1,5 % en poids d'un copolymère polypropylène de grade 100 commercialisé par la société Montell sous la dénomination Moplen™ EP-N 31 MA ;
- 1,5 % en poids de stéarate de zinc ;
- 0,1 % en poids d'un stabilisant thermique commercialisé sous le nom de Irganox™ 1010 par la société Ciba-Geigy.

Le MFI obtenu a une valeur de 10,8 g/10 min. mesuré dans les conditions précitées.

### Essai n° 20 :

Cet essai illustre l'invention et met en oeuvre une composition contenant :
- 41,0 % en poids d'une craie de Champagne traitée par de l'acide stéarique de diamètre moyen égal à 2 micromètres ;
- 41,0 % en poids d'une dolomie de diamètre moyen égal à 3 micromètres ;
- 17,9 % en poids d'un polypropylène isotactique de MFI égal à 238 g/10 min. (température 190°C, charge 10 kg, filière de 1,05 mm) ;
- 0,1 % en poids d'un stabilisant thermique commercialisé sous le nom de Irganox™ 1010 par la société Ciba-Geigy.

Le MFI obtenu a une valeur de 95,5 g/10 min, mesuré dans les conditions précitées.

### Essai n° 21 :

Cet essai illustre l'invention et met en oeuvre une composition contenant :
- 81,0 % en poids de marbre de diamètre moyen égal à 5 micromètres ;
- 5,0 % en poids d'un carbonate de calcium précipité commercialisé par la société Schäfer-Kalk sous la dénomination Precarb™ 400 ;
- 10,6 % en poids d'un polypropylène isotactique de MFI égal à 757 g/10 min. (température 190°C, charge 10 kg, filière de 1,05 mm) et 2,0 % en poids d'un polyéthylène basse densité commercialisé par la société Polimeri Europa sous la dénomination Riblene™ MV 10 ;
- 0,5 % en poids d'un dispersant du type phosphate d'alcool gras commercialisé par la société Coatex sous la dénomination. COATEX DOPP-18 ;
- 0,8 % en poids de stéarate de zinc ;
- 0,1 % en poids d'un stabilisant thermique commercialisé sous le nom de Irganox™ 1010 par la société Ciba-Geigy.

Le MFI obtenu a une valeur de 48,2 g/10 min. mesuré dans les conditions précitées.

### Essai n° 22 :

Cet essai illustre l'invention et met en oeuvre une composition contenant :
- 32,8 % en poids d'une craie de Champagne simplement traitée par de l'acide stéarique de diamètre moyen égal à 2 micromètres ;
- 60,2 % en poids de baryte de diamètre moyen égal à 5 micromètres ;
- 4,6 % en poids d'un polypropylène isotactique de MFI égal à 757 g/10 min. (température 190°C, charge 10 kg, filière de 1,05 mm) et 0,5 % en poids d'un copolymère polypropylène de grade 100 commercialisé par la société Montell sous la dénomination Moplen™ EP-N 31 MA ;
- 0,9 % en poids d'un dispersant du type phosphate d'alcool gras commercialisé par la société Coatex sous la dénomination COATEX DOPP-18 ;
- 0,9 % en poids de stéarate de zinc ;
- 0,1 % en poids d'un stabilisant thermique commercialisé sous le nom de Irganox™ 1010 par la société Ciba-Geigy.

Le MFI obtenu a une valeur de 26,0 g/10 min. mesuré dans les conditions précitées.

### Essai n° 23 :

Cet essai illustre l'invention et met en oeuvre une composition contenant :
- 42,0 % en poids d'une craie de Champagne simplement traitée par de l'acide stéarique de diamètre moyen égal à 2 micromètres ;
- 43,0 % en poids de dioxyde de titane (rutile) traité vendu sous le nom RL 90 ;
- 7,3 % en poids d'un polypropylène isotactique de MFI égal à 757 g/10 min. (température 190°C, charge 10 kg, filière de 1,05 mm) et 6,7 % en poids d'un polyéthylène basse densité commercialisé par la société Polimeri Europa sous la dénomination Riblene™ MV 10;
- 0,9 % en poids de stéarate de zinc ;
- 0,1 % en poids d'un stabilisant thermique commercialisé sous le nom de Irganox™ 1010 par la société Ciba-Geigy.

Le MFI obtenu a une valeur de 149,0 g/10 min. mesuré dans les conditions précitées.

### Essai n° 24 :

Cet essai illustre l'invention et met en oeuvre une composition contenant :
- 19,2 % en poids d'une craie de Champagne simplement traitée par de l'acide stéarique de diamètre moyen égal à 2 micromètres ;
- 60,5 % en poids de baryte dont le diamètre moyen est égal à 5 micromètres ;
- 11,5 % en poids de wollastonite traitée de longueur moyenne de fibres égale à 90 micromètres ;
- 6,1 % en poids d'un polypropylène isotactique de MFI égal à 757 g/10 min. (température 190°C, charge 10 kg, filière de 1,05 mm) et 1,7 % en poids d'un copolymère polypropylène de grade 100 commercialisé par la société Monteli sous la dénomination Moplen™ EP-N 31 MA,
- 0,9% en poids de stéarate de zinc ;
- 0,1 % en poids d'un stabilisant thermique commercialise sous le nom de Irganox™ 1010 par la société Ciba-Geigy.

Le MFI obtenu a une valeur de 146,0 g/10 min. mesuré dans les conditions précitées.

### Essai n° 25 :

Cet essai illustre l'invention et met en oeuvre une composition contenant :
- 75,0 % en poids d'une craie de Champagne simplement traitée par de l'acide stéarique de diamètre moyen égal à 2 micromètres;
- 12,0 % en poids sec d'une suspension aqueuse à 62,2 % en poids sec d'une craie de Champagne non traitée ne contenant pas de dispersant acrylique et de diamètre moyen égal à 1 micromètre ;
- 13,0 % en poids d'un polypropylène isotactique de MFI égal à 840 g/10 min. (température 190°C, charge 10 kg, filière de 1,05 mm).

Le MFI obtenu a une valeur de 12,0 g/10 min. mesuré dans les conditions précitées.

Les différents résultats obtenus sont rassemblés dans le tableau 2 suivant.

| | Essai n° | Type de charge minérale | % en poids de charge minérale dans mélange-maître | % en poids de polypropylène isotactique dans mélange-maître | MFI (g/10 min) du polypropylène isotactique (190°C/10 kg/1,05 mm) | MFI (g/10 min) de la composition (190°C/5 kg/2,09 mm) | Pourcentage de cristallinité ou indice d'isotacticité du polymère isotactique fluide |
|---|---|---|---|---|---|---|---|
| Invention | 16 | craie-talc | 41,5-41,5 | 15,9 | 840 | 10,6 | 61,6 |
| Invention | 17 | craie-talc | 64,25 - 21,25 | 13,9 | 840 | 20,7 | 61,6 |
| Invention | 18 | craie-hydroxyde de magnésium | 75,0-13,0 | 8,9 | 840 | 14,5 | 61,6 |
| Invention | 19 | calcite | 87,0 | 9,9 | 840 | 10,8 | 61,6 |
| Invention | 20 | craie-dolomie | 41,0-41,0 | 17,9 | 238 | 95,5 | 35,0 |
| Invention | 21 | marbre-carbonate de calcium précipité | 81,0-5,0 | 10,6 | 757 | 48,2 | 65,0 |
| Invention | 22 | craie-baryte | 32,8 - 60,2 | 4,6 | 757 | 26,0 | 65,0 |
| Invention | 23 | craie-dioxyde de titane | 42,0 - 43,0 | 7,3 | 757 | 149,0 | 65,0 |
| Invention | 24 | craie-baryte wollastonite | 19,2 - 60,5 -11,5 | 6,1 | 757 | 146,0 | 65,0 |
| Invention | 25 | craie | 87,0 | 13,0 | 840 | 12,0 | 61,6 |

La lecture du tableau 2 permet de constater la mise en oeuvre de polypropylène isotactique, de fluidité élevée et supérieure ou égale à un MEI de 200 g/10 min, mesuré suivant la norme modifiée NF T 51-620 (190°C - 10 kg - 1,05 mm), de préférence supérieure à 500 g/10 min., mesuré suivant la norme modifiée NF T 51-620 (190°C - 10 kg - 1,05 mm), avec un pourcentage de cristallinité supérieur à environ 20 %, préférentiellement compris entre 30% et 90 préférentiellement entre 50 % et 85 %, permet l'obtention de mélange-maitres qui contiennent différentes charges minérales et avec une teneur en charge égale ou supérieure à 80 %, et qui possèdent une fluidité élevée, c'est-à-dire de MFI supérieur ou égal à 5 g/10 min. (190°C - 5 kg - 2,09 mm) mesuré selon la norme NFT 51-620 et qui contierment au moins un polymère de type polypropylène isotactique présentant un pourcentage de cristallinité (appelé aussi indice d'isotacticité) supérieur à environ 20 %, préférentiellement compris entre: 30 % et. 90 %, très préférentiellement compris entre 50 % et 85 %, mesuré par la méthode DSC telle que précédemment décrite.

De plus, il peut être remarqué que le couplage du polypropylène isotactique à grande fluidité avec un ou plusieurs polymères permet ;
- un réglage de la fluidité du concentré de charge dans le but de réaliser des mélanges avec des charges de différentes natures et aux caractéristiques très différentes les unes par rapport aux autres telles que notamment la granulométrie, d'adapter la formule au procédé.
- d'augmenter la compatibilité du concentré de charge avec le milieu dans lequel il doit être dispersé,
- d'obtenir une formule moins onéreuse,
- un réglage de la dureté des concentrés.

### EXEMPLE 3

Cet exemple concerne la redispersion des mélange-maîtres dans différentes polyoléfines.

Pour ce faire et pour chacun des essais n° 26 à 53, on effectué l'extrusion d'un ruban d'épaisseur de 3 mm à travers une filière plate, au moyen d'une extrudeuse monovis Torey dont la vis possède un diamètre D de 25 mm, une longueur égale à 15 D alors que la filière a une longueur de 16 mm et une hauteur de 2,5 mm. La vitesse de rotation de la vis est de 50 tours par minute, le taux de compression de 3 et la température d'extrusion de 170°C pour du polyéthylène et de 210°C pour du polypropylène copolymère ou homopolymère.

Cette extrusion est effectuée par l'alimentation successive de l'extrudeuse avec la polyoléfine de redispersion vierge servant de témoin et par les mélanges constitués de la même polyoléfine et des mélange-maîtres selon l'invention à tester de manière à incorporer 20 % en poids de charge par rapport à la masse totale.

L'examen à la loupe binoculaire de grossissement 50 de chacune des dispersions effectuées a permis de noter de 1 à 6 l'aspect visuel de la dispersion avec la valeur 1 lorsqu'il n'y a pas dispersion et la valeur 6 lorsqu'il y a une très bonne dispersion c'est-à-dire lorsqu'il n'y a pas de points noirs correspondant à la polyoléfine dégradée et de points blancs correspondant à la charge.

Les résultats sont les suivants :

### Essai n° 26 :

Cet essai illustre l'invention et met en oeuvre le mélange-maître selon l'invention de l'essai n° 5 et la résine polypropylène homopolymère commercialisée par la société Montell sous la dénomination Montell™ TM 1600 K.
La valeur 6 est attribuée à la dispersion.

### Essai n° 27 :

Cet essai illustre l'invention et met en oeuvre le mélange-maître selon l'invention de l'essai n° 6 et la résine polypropylène homopolymère commercialisée par la société Montell sous la dénomination Montell™ TM 1600 K.
La valeur 6 est attribuée à la dispersion.

### Essai n° 28 :

Cet essai illustre l'invention et met en oeuvre le mélange-maître selon l'invention de l'essai n° 7 et la résine polypropylène homopolymère commercialisée par la société Montell sous la dénomination Montell™ TM 1600 K.

La valeur 6 est attribuée à la dispersion.

### Essai n° 29 :

Cet essai illustre l'invention et met en oeuvre le mélange-maître selon l'invention de l'essai n° 8 et la résine polypropylène homopolymère commercialisée par la société Montell sous la dénomination Montell™ TM 1600 K.
La valeur 6 est attribuée à la dispersion.

### Essai n° 30 :

Cet essai illustre l'invention et met en oeuvre le mélange-maître selon l'invention de l'essai n° 9 et la résine polypropylène homopolymère commercialisée par la société Montell sous la dénomination Montell™ TM 1600 K.
La valeur 6 est attribuée à la dispersion.

### Essai n° 31 :

Cet essai illustre l'invention et met en oeuvre le mélange-maître selon l'invention de l'essai n° 10 et la résine polypropylène homopolymère commercialisée par la société Montell sous la dénomination Montell™ TM 1600 K.
La valeur 6 est attribuée à la dispersion.

### Essai n° 32 :

Cet essai illustre l'invention et met en oeuvre le mélange-maître selon l'invention de l'essai n° 11 et la résine polypropylène homopolymère commercialisée par la société Montell sous la dénomination Montell™ TM 1600 K.
La valeur 6 est attribuée à la dispersion.

### Essai n° 33 :

Cet essai illustre l'invention et met en oeuvre le mélange-maître selon l'invention de l'essai n° 12 et la résine polypropylène homopolymère commercialisée par la société Montell sous la dénomination Montell™ TM 1600 K.
La valeur 6 est attribuée à la dispersion.

### Essai n° 34 :

Cet essai illustre l'invention et met en oeuvre le mélange-maître selon l'invention de l'essai n° 13 et la résine polypropylène homopolymère commercialisée par la société Montell sous la dénomination Montell™ TM 1600 K.
La valeur 6 est attribuée à la dispersion.

### Essai n° 35 :

Cet essai illustre l'invention et met en oeuvre le mélange-maître selon l'invention de l'essai n° 14 et la résine polypropylène homopolymère commercialisée par la société Montell sous la dénomination Montell™ TM 1600 K.
La valeur 6 est attribuée à la dispersion.

### Essai n° 36 :

Cet essai illustre l'invention et met en oeuvre le mélange-maître selon l'invention de l'essai n° 15 et la résine polypropylène homopolymère commercialisée par la société Montell sous la dénomination Montell™ TM 1600 K.
La valeur 6 est attribuée à la dispersion.

### Essai n° 37 :

Cet essai illustre l'invention et met en oeuvre le mélange-maître selon l'invention de l'essai n° 16 et la résine polypropylène homopolymère commercialisée par la société Montell sous la dénomination Montell™ TM 1600 K.
La valeur 6 est attribuée à la dispersion.

### Essai n° 38 :

Cet essai illustre l'invention et met en oeuvre le mélange-maître selon l'invention de l'essai n° 17 et la résine polypropylène homopolymère commercialisée par la société Montell sous la dénomination Montell™ TM 1600 K.
La valeur 6 est attribuée à la dispersion.

### Essai n° 39 :

Cet essai illustre l'invention et met en oeuvre le mélange-maître selon l'invention de l'essai n° 18 et la résine polypropylène homopolymère commercialisée par la société Montell sous la dénomination Montell™ TM 1600 K.
La valeur 6 est attribuée à la dispersion.

### Essai n° 40 :

Cet essai illustre l'invention et met en oeuvre le mélange-maître selon l'invention de l'essai n° 19 et la résine polypropylène homopolymère commercialisée par la société Montell sous la dénomination Montell™ TM 1600 K.
La valeur 6 est attribuée à la dispersion.

### Essai n° 41 :

Cet essai illustre l'invention et met en oeuvre le mélange-maître selon l'invention de l'essai n° 20 et la résine polypropylène homopolymère commercialisée par la société Montell sous la dénomination Montell™ TM 1600 K.
La valeur 6 est attribuée à la dispersion.

### Essai n° 42 :

Cet essai illustre l'invention et met en oeuvre le mélange-maître selon l'invention de l'essai n° 21 et la résine polypropylène homopolymère commercialisée par la société Montell sous la dénomination Montell™ TM 1600 K.
La valeur 6 est attribuée à la dispersion.

### Essai n° 43 :

Cet essai illustre l'invention et met en oeuvre le mélange-maître selon l'invention de l'essai n° 22 et la résine polypropylène homopolymère commercialisée par la société Montell sous la dénomination Montell™ TM 1600 K.
La valeur 6 est attribuée à la dispersion.

### Essai n° 44 :

Cet essai illustre l'invention et met en oeuvre le mélange-maître selon l'invention de l'essai n° 23 et la résine polypropylène homopolymère commercialisée par la société Montell sous la dénomination Montell™ TM 1600 K.
La valeur 6 est attribuée à la dispersion.

### Essai n° 45 :

Cet essai illustre l'invention et met en oeuvre le mélange-maître selon l'invention de l'essai n° 24 et la résine polypropylène homopolymère commercialisée par la société Montell sous la dénomination Montell™ TM 1600 K.
La valeur 6 est attribuée à la dispersion.

### Essai n° 46 :

Cet essai illustre l'invention et met en oeuvre la résine polypropylène copolymère commercialisée par la société Appryl sous la dénomination Appryl™ 3120 MN 1 et une composition selon l'invention contenant :
- 87 % en poids d'une craie de Champagne traitée par de l'acide stéarique de diamètre moyen égal à 2 micromètres ;
- 9,1 % en poids de polypropylène amorphe, de MFI égal à 450 g/10 min. (température 190°C, charge 10 kg, filière de 1,05 mm) commercialisé par la société Huntsman sous la dénomination Rexflex™ WL 125 ;
- 3,9 % en poids d'un polypropylène isotactique de MFI égal à 840 g/10 min. (température 190°C, charge 10 kg, filière de 1,05 mm).
La valeur 6 est attribuée à la dispersion.

### Essai n° 47 :

Cet essai illustre l'invention et met en oeuvre le mélange-maître selon l'invention de l'essai n° 14 et la résine polypropylène copolymère commercialisée par la société Appryl sous la dénomination Appryl™ 3120 MN 1.
La valeur 6 est attribuée à la dispersion.

### Essai n° 48 :

Cet essai illustre l'invention et met en oeuvre le mélange-maître selon l'invention de l'essai n° 14 et la résine polyéthylène haute densité commercialisée par la société Plüss-Staufer sous la dénomination Hostalen™ GD 7225.
La valeur 6 est attribuée à la dispersion.

### Essai n° 49 :

Cet essai illustre l'invention et met en oeuvre le mélange-maître selon l'invention de l'essai n° 12 et la résine polyéthylène haute densité commercialisée par la société Plüss-Staufer sous la dénomination Hostalen™ GD 7225.
La valeur 6 est attribuée à la dispersion.

### Essai n° 50 :

Cet essai illustre l'invention et met en oeuvre la résine polyéthylène haute densité commercialisée par la société Plüss-Staufer sous la dénomination Hostalen™ GD 7225 et le mélange-maître selon l'invention de composition :
- 87,0 % en poids d'une craie de Champagne traitée par de l'acide stéarique de diamètre moyen égal à 2 micromètres ;
- 10,0 % en poids d'un polypropylène isotactique de MFI égal à 840 g/10 min. (température 190°C, charge 10 kg, filière de 1,05 mm) et 3,0 % en poids d'un copolymère polypropylène de grade 100 commercialisé par la société Montell sous la dénomination Moplen™ EP-N 31 MA.
La valeur 6 est attribuée à la dispersion.

### Essai n° 51 :

Cet essai illustre l'invention et met en oeuvre la résine polyéthylène haute densité commercialisée par la société Plüss-Staufer sous la dénomination Hostalen™ GD 7225 et le mélange-maître selon l'invention de composition :
- 86,0 % en poids d'une craie de Champagne traitée par de l'acide stéarique de diamètre moyen égal à 2 micromètres ;
- 7,5 % en poids d'un polypropylène isotactique de MFI égal à 840 g/10 min. (température 190°C, charge 10 kg, filière de 1,05 mm) et 6,5 % en poids d'un copolymère polypropylène de grade 100 commercialisé par la société Montell sous la dénomination Moplen™ EP-N 31 MA.
La valeur 6 est attribuée à la dispersion.

### Essai n° 52 :

Cet essai illustre l'invention et met en oeuvre là résine polyéthylène basse densité commercialisée par la société BASF sous la dénomination Lupolene™ 2420 H et une composition selon l'invention contenant :
- 87 % en poids d'une craie de Champagne traitée par de l'acide stéarique de diamètre moyen égal à 2 micromètres ;
- 9,1 % en poids de polypropylène amorphe, de MFI égal à 450 g/10 min. (temperature 190°C, charge 10 kg, filière de 1,05 mm) commercialisé par la société Huntsman sous la dénomination Rexflex™ WL 125 ;
- 3,9 % en poids d'un polypropylène isotactique de MFI égal à 840 g/10 min. (température 190°C, charge 10 kg, filière de 1,05 mm).
La valeur 6 est attribuée à la dispersion.

### Essai n° 53 :

Cet essai illustre l'invention et met en oeuvre le mélange-maître selon l'invention de l'essai n° 14 et la résine polyéthylène basse densité commercialisée par la société BASF sous la dénomination Lupolene™ 2420 H.
La valeur 6 est attribuée à la dispersion.

La lecture de tous ces résultats permet de constater que la sélection de polypropylène isotactique de fluidité élevée et supérieure ou égale à 200g/10 min. comme précédemment mesurée permet d'obtenir une excellente redispersion quelles que soient la résina de redispersion ou la charge constitutive du mélange-maître.

### EXEMPLE 4

Cet exemple concerne les propriétés mécaniques de divers mélange-maîtres selon l'invention et réalisés à l'échelle industrielle.
Pour ce faire et pour chacun des essais n° 54 à 65, des éprouvettes réalisées par injection sont soumises à des tests de propriétés mécaniques.
Pour ce faire, on réalise des éprouvettes normalisées (ISO 1873-2 :1989) au moyen d'une presse Nestal Neomat 170/90 pilotée par un microprocesseur avec une force de fermeture de 900 kN, un diamètre de vis de 32 mm et un rapport longueur/diamètre de 18,8.

Les principaux paramètres de réglage de la presse sont les suivants :
- la température de la matière est comprise entre 200°C et 240°C selon le polymère ou copolymère de dispersion mis en oeuvre,
- la température du moule est de 40°C,
- la température de buse évolue entre 180°C et 240°C selon le polymère ou copolymère de dispersion mis en oeuvre,
- la vitesse d'injection maximale est de 200 m/s,
- la pression d'injection est de 100 bars,
- la durée du cycle est de l'ordre de 62 secondes comprenant un temps de refroidissement de 30 secondes, un temps d'injection de 2 secondes, un temps de maintien de 25 secondes et enfin un temps entre deux cycles de 5 secondes.

La presse est alimentée successivement avec des polymères ou copolymères seuls servant de témoin et par des mélanges des mêmes polymères ou copolymères dans lesquelles ont été introduits les mélange-maîtres selon l'invention et réalisés, sous forme de granulés à un débit de 155 kg/h, par l'ajout des différents constituants dans un mélangeur continu à double vis terminé par une extrudeuse monovis à la sortie de laquelle est adapté un granulateur.

Les tests de propriétés mécaniques effectués sont la détermination du module d'élasticité en flexion quatre points selon la norme DIN 53457 et la détermination du choc Charpy à 23°C selon la norme DIN 53453.

### Essai n° 54:

Cet essai illustre l'art antérieur et met en oeuvre une dispersion contenant 60 % en poids de la résine polyéthylène haute densité commercialisée par la société Plüss-Staufer sous la dénomination Hostalen™ GD 7225 et 40 % en poids du mélange-maître de l'essai n° 2 de l'art antérieur.

Les résultats obtenus sont égaux à 799 N/mm² pour le module d'élasticité en flexion quatre points selon la norme DIN 53457 et 3,4 kJ/m² pour le choc Charpy à 23°C selon la norme DIN 53453.

### Essai n° 55 :

Cet essai illustre l'invention et met en oeuvre une dispersion contenant 60 % en poids de la résine polyéthylène haute densité commercialisée par la société Plüss-Staufer sous la dénomination Hostalen GD 7225 et 40 % en poids du mélange-maître selon l'invention de composition :
- 87,0 % en poids d'une craie de Champagne traitée par de l'acide stéarique de diamètre moyen égal à 2 micromètres ;
- 10,0 % en poids d'un polypropylène isotactique de MFI égal à 840 g/10 min. (température 190°C, charge 10 kg, filière de 1,05 mm) et 3,0 % en poids d'un copolymère polypropylène de grade 100 commercialisé par la société Montell sous la dénomination Moplen™ EP-N 31 MA.

Les résultats obtenus sont égaux à 1363 N/mm² pour le module d'élasticité en flexion quatre points selon la norme DIN 53457 et 3,4 kJ/m² pour le choc Charpy à 23°C selon la norme DIN 53453.

### Essai n° 56 :

Cet essai illustre l'invention et met en oeuvre une dispersion contenant 60 % en poids de la résine polyéthylène haute densité commercialisée par la société Plüss-Staufer sous la dénomination Hostalen™ GD 7225 et 40 % en poids du mélange-maître selon l'invention de composition :
- 87,0 % en poids d'une craie de Champagne traitée par de l'acide stéarique de diamètre moyen égal à 2 micromètres ;
- 8,5 % en poids d'un polypropylène isotactique de MFI égal à 840 g/10 min. (température 190°C, charge 10 kg, filière de 1,05 mm) et 4,5 % en poids d'un copolymère polypropylène de grade 100 commercialisé par la société Montell sous la dénomination Moplen™ EP-N 31 MA.

Les résultats obtenus sont égaux à 1333 N/mm² pour le module d'élasticité en flexion quatre points selon la norme DIN 53457 et 3,6 kJ/m² pour le choc Charpy à 23°C selon la norme DIN 53453.

### Essai n° 57 :

Cet essai illustre l'invention et met en oeuvre une dispersion contenant 60 % en poids de la résine polyéthylène haute densité commercialisée par la société Plüss-Staufer sous la dénomination Hostalen™ GD 7225 et 40 % en poids du mélange-maître selon l'invention de composition :
- 87,0 % en poids d'une craie de Champagne traitée par de l'acide stéarique de diamètre moyen égal à 2 micromètres ;
- 7,0 % en poids d'un polypropylène isotactique de MFI égal à 840 g/10 min. (température 190°C, charge 10 kg, filière de 1,05 mm) et 6,0 % en poids d'un copolymère polypropylène de grade 100 commercialisé par la société Montell sous la dénomination Moplen™ EP-N 31 MA.

Les résultats obtenus sont égaux à 1309 N/mm² pour le module d'élasticité en flexion quatre points selon la norme DIN 53457 et 3,4 kJ/m² pour le choc Charpy à 23°C selon la norme DIN 53453.

### Essai n° 58 :

Cet essai illustre un témoin pour lequel les propriétés mécaniques sont mesurées sur la résine vierge à savoir la résine polypropylène homopolymère commercialisée par la société Montell sous la dénomination Montell™ TM 1600 K.

Les résultats obtenus sont égaux à 914 N/mm² pour le module d'élasticité en flexion quatre points selon la norme DIN 53457 et 2,6 kJ/m² pour le choc Charpy à 23°C selon la norme DIN 53453.

### Essai n° 59 :

Cet essai illustre l'art antérieur et met en oeuvre une dispersion contenant 60 % en poids de la résine polypropylène homopolymère commercialisée par la société Montell sous la dénomination Montell™ TM 1600 K et 40 % en poids du mélange-maître de l'essai n° 2 de l'art antérieur.

Les résultats obtenus sont égaux à 1446 N/mm² pour le module d'élasticité en flexion quatre points selon la norme DIN 53457 et 3,0 kJ/m² pour le choc Charpy à 23°C selon la norme DIN 53453

### Essai n° 60 :

Cet essai illustre l'invention et met en oeuvre une dispersion contenant 60 % en poids de la résine polypropylène homopolymère commercialisée par la société Montell sous la dénomination Montell™ TM 1600 K et 40 % en poids du mélange-maître selon l'invention de composition :
- 87,0 % en poids d'une craie de Champagne traitée par de l'acide stéarique de diamètre moyen égal à 2 micromètres ;
- 10,0 % en poids d'un polypropylène isotactique de MFI égal à 840 g/10 min. (température 190°C, charge 10 kg, filière de 1,05 mm) et 3,0 % en poids d'un copolymère polypropylène de grade 100 commercialisé par la société Montell sous la dénomination Moplen™ EP-N 31 MA.

Les résultats obtenus sont égaux à 1805 N/mm² pour le module d'élasticité en flexion quatre points selon la norme DIN 53457 et 3,0 kJ/m² pour le choc Charpy à 23°C selon la norme DIN 53453.

### Essai n° 61 :

Cet essai illustre l'invention et met en oeuvre une dispersion contenant 60 % en poids de la résine polypropylène homopolymère commercialisée par la société Montell sous la dénomination Montell™ TM 1600 K et 40 % en poids du mélange-maître selon l'invention de composition :
- 87,0 % en poids d'une craie de Champagne traitée par de l'acide stéarique de diamètre moyen égal à 2 micromètres ;
- 8,5 % en poids d'un polypropylène isotactique de MFI égal à 840 g/10 min. (température 190°C, charge 10 kg, filière de 1,05 mm) et 4,5 % en poids d'un copolymère polypropylène de grade 100 commercialisé par la société Montell sous la dénomination Moplen™ EP-N 31 MA.

Les résultats obtenus sont égaux à 1718 N/mm² pour le module d'élasticité en flexion quatre points selon la norme DIN 53457 et 3,2 kJ/m² pour le choc Charpy à 23°C selon la norme DIN 53453.

### Essai n° 62 :

Cet essai illustre l'invention et met en oeuvre une dispersion contenant 60 % en poids de la résine polypropylène homopolymère commercialisée par la société Montell sous la dénomination Montell™ TM 1600 K et 40 % en poids du mélange-maître selon l'invention de composition :
- 87,0 % en poids d'une craie de Champagne traitée par de l'acide stéarique de diamètre moyen égal à 2 micromètres ;
- 7,0 % en poids d'un polypropylène isotactique de MFI égal à 840 g/10 min. (température 190°C, charge 10 kg, filière de 1,05 mm) et 6,0 % en poids d'un copolymère polypropylène de grade 100 commercialisé par la société Montell sous la dénomination Moplen™ EP-N 31 MA.

Les résultats obtenus sont égaux à 1754 N/mm² pour le module d'élasticité en flexion quatre points selon la norme DIN 53457 et 3,1 kJ/m² pour le choc Charpy à 23°C selon la norme DIN 53453.

### Essai n° 63 :

Cet essai illustre l'invention et met en oeuvre une dispersion contenant 69 % en poids de la résine polypropylène commercialisée par la société Borealis sous la dénomination Borealis™ 202 E et 31 % en poids du mélange-maître (correspondant à 25 % en poids de charge minérale) selon l'invention de composition :
- 80,5 % en poids d'un talc de granulométrie telle que 41 % des particules ont un diamètre moyen inférieur à 5 micromètres ;
- 18,5 % en poids d'un polypropylène isotactique de MFI égal à 1038 g/10 min. (température 190°C, charge 10 kg, filière de 1,05 mm) ;
- 1,0 % en poids de stéarate de zinc.

Les résultats obtenus sont égaux à 2212 N/mm² pour le module d'élasticité en flexion quatre points selon la norme DIN 53457 et 12 kJ/m² pour le choc Charpy à 23°C selon la norme DIN 53453.

### Essai n° 64 :

Cet essai illustre l'invention et met en oeuvre une dispersion contenant 69,88 % en poids de la résine polypropylène commercialisée par la société Borealis sous la dénomination Borealis™ 202 E et 30,12 % en poids du mélange-maître (correspondant à 25 % en poids de charge minérale traitée) selon l'invention de composition :
- 41,5 % en poids d'une craie de Champagne traitée par de l'acide stéarique de diamètre moyen égal à 2 micromètres ;
- 41,5 % en poids d'un talc de granulométrie telle que 41 % des particules ont un diamètre moyen inférieur à 5 micromètres ;
- 16,5 % en poids d'un polypropylène isotactique de MFI égal à 1038 g/10 min. (température 190°C, charge 10 kg, filière de 1,05 mm) ;
- 0,5 % en poids d'un dispersant du type phosphate d'alcool gras commercialisé par la société Coatex sous la dénomination COATEX DOPP-18.

Les résultats obtenus sont égaux à 1845 N/mm² pour le module d'élasticité en flexion quatre points selon la norme DIN 53457 et 18 kJ/m² pour le choc Charpy à 23°C selon la norme DIN 53453.

### Essai n° 65 :

Cet essai illustre l'invention et met en oeuvre une dispersion contenant 70,59 % en poids de la résine polypropylène commercialisée par la société Borealis sous la dénomination Borealis™ 202 E et 29,41 % en poids du mélange-maître (correspondant à 25 % en poids de charge minérale traitée) selon l'invention de composition :
- 63,75 % en poids d'une craie de Champagne traitée par de l'acide stéarique de diamètre moyen égal à 2 micromètres ;
- 21,25 % en poids d'un talc de granulométrie telle que 41 % des particules ont un diamètre moyen inférieur à 5 micromètres ;
- 14,5 % en poids d'un polypropylène isotactique de MFI égal à 1038 g/10 min. (température 190°C, charge 10 kg, filière de 1,05 mm) ;
- 0,5 % en poids d'un dispersant du type phosphate d'alcool gras commercialisé par la société Coatex sous la dénomination COATEX DOPP-18.

Les résultats obtenus sont égaux à 1670 N/mm² pour le module d'élasticité en flexion quatre points selon la norme DIN 53457 et 22 kJ/m² pour le choc Charpy à 23°C selon la norme DIN 53453.

Les différents résultats obtenus sont rassemblés dans le tableau 3 suivant.

| | Essai n° | Type de résine | Mélange-maître % charge - % polypropylène isotactique | Module d'élasticité en flexion quatre points (N/mm²) | Choc Charpy à 23°C (kJ/m²) |
|---|---|---|---|---|---|
| Art antérieur | 54 | PEHD | 88 % craie - 0 % PPI | 799 | 3,4 |
| Invention | 55 | PEHD | 87 % craie - 8,5 % PPI | 1363 | 3,4 |
| Invention | 56 | PEHD | 87 % craie - 8,5 % PPI | 1333 | 3,6 |
| Invention | 57 | PEHD | 87 % craie - 8,5 % PPI | 1309 | 3,4 |
| Témoin | 58 | PPH | 0% | 914 | 2,6 |
| Art antérieur | 59 | PPH | 88 % craie - 0 % PPI | 1446 | 3,0 |
| Invention | 60 | PPH | 87 % craie - 10 % PPI | 1805 | 3,0 |
| Invention | 61 | PPH | 87 % craie - 8,5 % PPI | 1718 | 3,2 |
| Invention | 62 | PPH | 87 % craie - 7 % PPI | 1754 | 3,1 |
| Invention | 36 | PP | 80,5 % talc - 18,5 % PPI | 2212 | 12,0 |
| Invention | 64 | PP | 41,5 % craie - 41,5% talc - 16,5 % PPI | 1845 | 18,0 |
| Invention | 65 | PP | 63,75 % craie - 21,25 % talc - 14,5 % PPI | 1670 | 22,0 |

| | | | | | |
|---|---|---|---|---|---|
| PEHD : Polyéthylène haute densité PPH : Polypropylène homopolymère PPI : Polypropylène isotactique PP : Polypropylène | | | | | |

La lecture du tableau 3 permet de constater que la sélection de polypropylène isotactique de fluidité élevée et supérieure ou égale à 200 g/10 min. comme précédemment mesurée permet d'obtenir d'excellentes propriétés mécaniques quelles que soient la résine de redispersion ou la charge constitutive du mélange-maître.

Les bonnes propriétés d'impact caractérisent la bonne dispersion de la charge dans la matrice polymère.

### EXEMPLE 5

Cet exemple concerne la détermination de la dureté des produits selon l'invention.

Dans ce but, pour chacun des essais n° 66 à 68, les mélange-maîtres selon l'invention refroidis à température ambiante ayant été réalisés, sous forme de pâtes à environ 190°C et à un débit de 155 kg/h, par l'ajout des différents constituants dans un mélangeur continu à double vis d'une capacité nominale de 500 kg/h et terminé par une extrudeuse monovis, on a procédé à la mesure de la dureté Shore D en à l'aide d'un duromètre de type Zwick™ et selon la norme NF T 51-109, et dès la mise sous contrainte de l'échantillon de concentré de charge encore appelé mélange-maître.

### Essai n° 66 :

Cet essai illustre l'art antérieur et met en oeuvre une composition contenant :
- 87 % en poids d'une craie de Champagne traitée par de l'acide stéarique de diamètre moyen égal à 2 micromètres ;
- 13 % en poids de polypropylène amorphe, de MFI égal à 450 g/10 min. (température 190°C, charge 10 kg, filière de 1,05 mm) commercialisé par la société Huntsman sous la dénomination Rexflex™ WL 125.
   La dureté obtenue est de 66.

### Essai n° 67 :

Cet essai illustre l'invention et met en oeuvre une composition contenant :
- 87 % en poids d'une craie de Champagne traitée par de l'acide stéarique de diamètre moyen égal à 2 micromètres ;
- 9,1 % en poids de polypropylène amorphe, de MFI égal à 450 g/10 min. (température 190°C, charge 10 kg, filière de 1,05 mm) commercialisé par la société Huntsman sous la dénomination Rexflex™ WL 125 ;
- 3,9 % en poids d'un polypropylène isotactique de MFI égal à 840 g/10 min. (température 190°C, charge 10 kg, filière de 1,05 mm).
   La dureté obtenue est de 73.

### Essai n° 68 :

Cet essai illustre l'invention et met en oeuvre une composition contenant :
- 87 % en poids d'une craie de Champagne traitée par de l'acide stéarique de diamètre moyen égal à 2 micromètres ;
- 13 % en poids d'un polypropylène isotactique de MFI égal à 840 g/10 min. (température 190°C, charge 10 kg, filière de 1,05 mm).
   La dureté obtenue est de 76.

Les précédents résultats montrent que les composés selon l'invention sont plus durs que ceux de l'art antérieur (76 et 73 sont supérieurs à 66) et qu'il est possible de régler la dureté du mélange-maître en faisant varier la composition de la partie organique de celui-ci.

### EXEMPLE 6

Cet exemple concerne l'utilisation de mélange-maîtres, selon l'invention, dans l'extrusion de films.

Pour la réalisation des films de polyéthylène linéaire basse densité, encore noté LLDPE et pour chacun des essais n° 70 à 76, la résine LLDPE est extrudée en présence de quantités croissantes du mélange-maître de l'essai n° 14 selon l'invention, par la mise en oeuvre d'un rhéomètre de type Haake Rheocord™ équipé d'une extrudeuse double vis tournant à 30 tours/minute et par passage au travers de la filière circulaire à une température de 190°C et dont le diamètre est augmenté avant refroidissement par injection en continu d'air sous une pression de 40 bars.
Le refroidissement est effectué à l'air.
Le film réalisé, on en mesure l'épaisseur.

L'essai n° 69 correspond au témoin, c'est-à-dire à la réalisation d'un film avec une résine LLDPE vierge qui donne une épaisseur de film égale à 9 micromètres.

Les différentes quantités de mélange-maîtres de l'essai n° 14 mises en oeuvre selon l'invention, correspondent aux pourcentages massiques de craie par rapport au poids de la résine comme décrit ci-après.

### Essai n° 70 :

Cet essai qui illustre l'invention correspond à 5,3 % de craie par rapport au poids de LLDPE et donne une épaisseur de film égale à 11 micromètres.

### Essai n° 71 :

Cet essai qui illustre l'invention correspond à 15,2 % de craie par rapport au poids de LLDPE et donne une épaisseur de film égale à 15 micromètres.

### Essai n° 72 :

Cet essai qui illustre l'invention correspond à 28,7 % de craie par rapport au poids de LLDPE et donne une épaisseur de film égale à 19 micromètres.

### Essai n° 73 :

Cet essai qui illustre l'invention correspond à 29,1 % de craie par rapport au poids de LLDPE et donne une épaisseur de film égale à 22 micromètres.

### Essai n° 74 :

Cet essai qui illustre l'invention correspond à 45,6 % de craie par rapport au poids de LLDPE et donne une épaisseur de film égale à 32 micromètres.

### Essai n° 75 :

Cet essai qui illustre l'invention correspond à 51,7 % de craie par rapport au poids de LLDPE et donne une épaisseur de film égale à 31 micromètres.

### Essai n° 76 :

Cet essai qui illustre l'invention correspond à 53,2 % de craie par rapport au poids de LLDPE et donne une épaisseur de film égale à 25 micromètres.

Ainsi, à la lecture des résultats on peut voir qu'il est possible d'obtenir un film extrudé contenant le mélange-maître selon l'invention.

### EXEMPLE 7

Cet exemple concerne l'utilisation de mélange-maîtres, selon l'invention, dans le calandrage.

Pour ce faire, et pour chacun des essais, on prépare, sur un mélangeur à cylindres, un mélange de 60 % en poids de polymère vierge avec 40 % en poids de la composition de l'essai n° 9 selon l'invention.

Les paramètres du mélangeur sont, pour chacun des essais :
- température des cylindres égale à 170°C,
- épaisseur de passage entre les cylindres égale à 1 mm
- vitesse des cylindres égale à 25 t/min.

Le calandrage est terminé lorsque la composition est visuellement homogène.

On détermine alors, pour chacun des essais, le module d'élasticité en flexion quatre points selon la norme DIN 53457 et le choc Charpy entaillé à 23°C selon la norme DIN 53453.

### Essai n° 77 :

Cet essai illustre l'invention et met en oeuvre, comme polymère vierge, un polypropylène homopolymère commercialisé par la société Montell sous la dénomination Montell™ TM 1600K.

Les résultats obtenus sont égaux à 1 695 N/mm² pour le module d'élasticité en flexion quatre points selon la norme DIN 53457 et 2,9 kJ/m² pour le choc Charpy entaillé à 23°C selon la norme DIN 53453.

### Essai n° 78 :

Cet essai illustre l'invention et met en oeuvre, comme polymère vierge, un polyéthylène de haute densité commercialisé par la société Plüss-Staufer sous la dénomination Hostalen™ GC 7260.

Les résultats obtenus sont égaux à 1 285 N/mm² pour le module d'élasticité en flexion quatre points selon la norme DIN 53457 et 3,4 kJ/m² pour le choc Charpy entaillé à 23°C selon la norme DIN 53453.

Ainsi la lecture des résultats permet de voir que les mélange-maîtres selon l'invention sont utilisables dans les techniques de calandrage.

## Revendications

1. Procédé pour la préparation de mélange-maîtres ou concentrés de charge(s) minérale(s) fortement chargés en matière(s) ou charge(s) minérale(s), utilisables pour charger des matières thermoplastiques à l'aide desdites charges minérales, mettant en oeuvre des polymères ou des mélanges de polymères comme liant **caractérisé en ce que** lesdits polymères ou mélanges de polymères :
- comprennent au moins un polypropylène isotactique de très grande fluidité,
- ont un pourcentage de cristauinité communément appelé indice d'isotacticité supérieur à environ 20 %, préférentiellement compris entre 30 % et 90 %, très préférentiellement compris entre 50 % et 85 %, mesuré par la méthode DSC, et
- **en ce que** la teneur en charge minérale du mélange-maître est supérieure à 80% en poids

2. Procédé pour la préparation de mélange-maîtres ou concentrés de charge(s) minérale(s) fortement chargés en matière(s) ou charge(s) minérale(s) selon la revendication 1, **caractérisé en ce que** lesdits polymères ou mélanges de polymères présentent un indice de fluidité supérieur ou égal à 500 g/10 min., mesuré suivant la norme modifiée NF T 51-620 (190°C -10 kg - 1,05 mm).

3. Procédé pour la préparation de mélange-maîtres ou concentrés de charge(s) minérale(s) fortement chargés en matière(s) ou charge(s) minérale(s) selon la revendication 1 **caractérisé en ce que** la partie organique du concentré de charges, c'est à dire le mélange de polymères formant le liant et éventuellement les additifs usuels, est composée :
- de 30 % à 100 % de polypropylène isotactique de très grande fluidité dont le MFI mesuré suivant la norme modifiée NFT 51-620 est supérieur ou égal à 200 g /10 min. (température 190°C, charge 10 kg, filiére de 1,05 mm);
- de 0 à 70 % de polyoléfines amorphes et/ou cristallines choisies parmi le polypropylène, le polyéthylène et les polymères ou copolymères à base de monomères éthyléniques contenant 2 à 6 atomes de carbone seuls ou en mélange ;
- de 0 à 5 % d'additifs tels que des stabilisants thermiques, des antioxydants, des anti-UV, des dispersants, des lubrifiants, des colorants, des plastifiants, des antistatiques, des ignifugeants, des agents de nucléation, des agents passivant les métaux tels que les agents cupropassifs.

4. Procédé pour la préparation de mélange-maîtres ou concentrés de charge(s) minérale(s) fortement chargés en matière(s) ou charge(s) minérale(s) selon l'une quelconque des revendications 1 à 3 **caractérisé en ce que** ledit polymère est un polypropylène isotactique de très grande fluidité.

5. Procédé pour la préparation de mélange-maîtres ou concentrés de charge(s) minérale(s) fortement chargés en matière(s) ou charge(s) minérale(s) selon l'une quelconque des revendications 1 à 3 **caractérisé en ce que** lesdits polymères ou mélange de polymères sont constitués d'au moins un polypropylène isotactique de très grande fluidité et d'au moins un autre polymère oléfinique cristallin ou amorphe.

6. Procédé pour la préparation de mélange-maîtres on concentrés de charge(s) minérale(s) fortement chargés en matière(s) ou charge(s) minérale(s) selon la revendication 5 **caractérisé en ce que** l'autre polymère oléfinique cristallin ou amorphe est un polyéthylène.

7. Procédé pour la préparation de mélange-maîtres ou concentrés de charge(s) minérale(s) fortement chargés en matière(s) ou charge(s) minérale(s) selon la revendication 5 **caractérisé en ce que** lesdits polymères ou mélange de polymères sont constitués d'un polypropylène isotactique de très grande fluidité et d'un polyéthylène.

8. Procédé pour la préparation de mélange-maîtres ou concentrés de charge(s) minérale(s) fortement chargés en matière(s) ou charge(s) minérale(s) selon l'une quelconque des revendications 1 à 2 **caractérise en ce que** lesdits polymères ou mélange de polymères sont constitués d'au moins un polypropylène isotactique de très grande fluidité et d'au moins un autre copolymère ou terpolymère oléfinique amorphe ou atactique ou sensiblement amorphe on sensiblement atactique.

9. Mélange-maître ou concentré de charge(s) minérale(s) fortement chargés en matière(s) ou charge(s) minérale(s) **caractérisé en ce qu'**il contient une teneur en charge minérale supérieure à 80 % en poids, préférentiellement de 80,5 % à 93,0 % et très préférentiellement de 82,0 % à 93,0 %, **en ce qu'**il possède un indice de fluidité ou MFI supérieur ou égal à 5 g/10 min. (190°C - 5 kg - 2,09 mm) mesuré selon la norme NF T 51-620, de préférence supérieur ou égal à 8 g/10 min. (190°C - 5 kg - 2,09 mm), et **en ce qu'**il contient au moins un polymère de type polypropylène isotactique de très grande fluidité présentant un pourcentage de cristallinité (appelé aussi indice d'isotacticité) supérieur à environ 20 %, préférentiellement compris entre 30 % et 90 %, très préférentiellement compris entre 50 % et 85 %, mesuré par la méthode DSC.

10. Mélange-maître ou concentré de charge(s) minérale(s) fortement chargés en matière(s) ou charge(s) minérale(s) selon la revendication 9 **caractérisé en ce que** la ou les charge(s) minérales traitées ou non sont choisies parmi les carbonates tels que les carbonates de calcium naturel dont les différentes craies, calcites, marbres ou parmi les carbonates synthétiques tels que les carbonates de calcium précipité à différents stades de cristallisation ou encore sont choisies parmi les sels mixtes de magnésium et de calcium tels que les dolomies ou encore parmi le carbonate de magnésium, le carbonate de zinc, la chaux, la magnésie, le sulfate de baryum tel que notamment la baryte, le sulfate de calcium, la silice, les silico-magnésiens tels que le talc, la wollastonite, les argiles et autres silico-alumineux tels que les kaolins, le mica, les oxydes ou hydroxydes de métaux ou d'alcalino-terreux tels que l'hydroxyde de magnésium, les oxydes de fer, l'oxyde de zinc, la fibre ou la poudre de verre, la fibre ou de poudre de bois, les pigments minéraux ou organiques ou les mélanges de ces composés tels que les mélanges de talc et de carbonates ainsi que les mélanges d'oxyde de titane et de carbonates, mélanges effectués avant ou après le broyage des minéraux.

11. Mélange-maître ou concentré de charge(s) minérale(s) fortement chargés en matière(s) ou charge(s) minérale(s) selon la revendication 10 **caractérisé en ce que** la ou les charge(s) minérales traitées ou non sont choisies parmi les carbonates de calcium naturel dont les différentes craies, calcites, marbres ou parmi les carbonates synthétiques tels que les carbonates de calcium précipité, ou encore parmi le talc, l'hydroxyde de magnésium, la baryte, le dioxyde de titane, la wollastonite ou les dolomies et leurs mélanges.

12. Procédé pour préparer des matières thermoplastiques chargées à l'aide de charge(s) minérale(s), **caractérisé** on ce que l'on effectue un mélange, en une ou plusieurs fois, de ladite ou desdites matières thermoplastiques avec un mélange-maître selon l'une quelconque des revendications 9 à 11 **caractérise en ce que** ladite ou lesdites matières thermoplastiques sont choisies parmi les polyéthylènes basse densité, linéaires ou ramifiés, ou les polyéthylènes haute densité, les polypropylènes homo- ou copolymères, les polyisobutylènes et les copolymères obtenus lors de la polymérisation de deux au moins des co-monomères éthylène, propylène, isobutylène, les polyoléfines modifiées par greffage telles que les polyoléfines greffées anhydride maléique ou par copolymérisation telles que les polyoléfines halogénées, les polypropylènes modifiés EPDM (éthylène, propylène, diène, monomère), les polypropylènes modifiés SEBS (styrène, éthylène, butylène, styrène) ou encore de deux au moins des polymères et copolymères précités, en mélange, ou encore les caoutchoucs ou élastomères naturels ou synthétiques et thermoplastiques, parmi ces derniers notamment les caoutchoucs SBR (caoutchouc styrène-butadiène) ou EPDM ou SEBS thermoplastiques.

13. Utilisation de mélange-maîtres selon l'une quelconque des revendications 9 à 11, éventuellement sous forme d'agrégats ou de granulés, pour fabriquer des articles industriels moulés, par thermoformage ou injection.

14. Utilisation de mélange-maîtres selon l'une quelconque des revendications 9 à 11, éventuellement sous forme d'agrégats ou de granulés, pour l'extrusion et notamment d'un film, d'une gaine ou d'un tube on d'un profilé, ou des fils et des câbles, pour l'extrusion soufflage, l'extrusion de bandelettes ou de feuilles ou encore l'extrusion couchage sur papier ou feuille métallique.

15. Utilisation de mélange-maîtres selon l'une quelconque des revendications 9 à 11, éventuellement sous forme d'agrégats ou de granulés, pour le calandrage.

16. Objets moulés, extrudés ou calandrés obtenus par la mise en oeuvre de mélange-maîtres selon l'une quelconque des revendications 9 à 11.

## Claims

1. Method for the production of mineral filler masterbatches or concentrates, highly filled with mineral material(s) or filler(s), which can be used for filling thermoplastics with said mineral fillers, employing polymers or polymer blends as binder, **characterized in that** said polymers or polymer blends:
- comprise at least one isotactic polypropylene of very high melt flow index;
- have a percentage crystallinity, commonly called isotacticity index, of greater than about 20%, preferably between 30% and 90% and very preferably between 50% and 85%, measured by the DSC method;
- **in that** the mineral filler content of the masterbatch is greater than 80% by weight; and
- **in that** said polymers or polymer blends have a melt flow index or MFI of 200 g/10 min or higher, measured according to the amended standard NF T 51-620 (190°C/10 kg/1.05 mm).

2. Method for the production of mineral filler masterbatches or concentrates, highly filled with mineral material(s) or filler(s) according to Claim 1, **characterized in that** said polymers or polymer blends have a melt flow index of 500 g/10 min or higher, measured according to the amended standard NF T 51-620 (190°C/10 kg/1.05 mm).

3. Method for the production of mineral filler masterbatches or concentrates, highly filled with mineral material(s) or filler(s) according to Claim 1, **characterized in that** the organic part of the filler concentrate, that is to say the polymer blend forming the binder and, optionally, the usual additives, is composed of:
- 30% to 100% of isotactic polypropylene of very high flow melt index (MFI), measured according to the amended standard NF T 51-620, of 200 g/10 min or higher (190°C temperature, 10 kg load, 1.05 mm die);
- 0 to 70% of amorphous and/or crystalline polyolefins chosen from polypropylene, polyethylene and polymers or copolymers based on ethylenic monomers containing 2 to 6 carbon atoms, by themselves or as a blend; and
- 0 to 5% of additives such as heat stabilizers, antioxidants, UV stabilizers, dispersants, lubricants, colorants, plasticizers, antistatic agents, fire retardants, nucleating agents and agents for passivating metals, such as copper-passivating agents.

4. Method for the production of mineral filler masterbatches or concentrates, highly filled with mineral material(s) or filler(s) according to any one of Claims 1 to 3, **characterized in that** said polymer is an isotactic polypropylene of very high melt flow index.

5. Method for the production of mineral filler masterbatches or concentrates, highly filled with mineral material(s) or filler(s) according to any one of Claims 1 to 3, **characterized in that** said polymers or polymer blends consist of at least one isotactic polypropylene of very high melt flow index and at least one other olefinic polymer, whether crystalline or amorphous.

6. Method for the production of mineral filler masterbatches or concentrates, highly filled with mineral material(s) or filler(s) according to Claim 5, **characterized in that** the other crystalline or amorphous, olefinic polymer is a polyethylene.

7. Method for the production of mineral filler masterbatches or concentrates, highly filled with mineral material(s) or filler(s) according to Claim 5, **characterized in that** said polymers or polymer blends consist of an isotactic polypropylene of very high melt flow index and a polyethylene.

8. Method for the production of mineral filler masterbatches or concentrates, highly filled with mineral material(s) or filler(s) according to either of Claims 1 and 2, **characterized in that** said polymers or polymer blends consist of at least one isotactic polypropylene of very high melt flow index and at least one other olefinic copolymer or terpolymer which is amorphous or atactic or substantially amorphous or substantially atactic.

9. Mineral filler masterbatch or concentrate, highly filled with mineral material(s) or filler(s), **characterized in that** it has a mineral filler content by weight of greater than 80%, preferably from 80.5% to 95.0% and very preferably from 82.0% to 93.0%, **in that** it possesses an MFI of 5 g/10 min or higher (190°C/5 kg/2.09 mm), measured according to the standard NF T 51-620, preferably 8 g/10 min or higher (190°C/5 kg/2.09 mm), and **in that** it contains at least one polymer of the isotactic polypropylene type with a very high melt flow index, having a percentage crystallinity (also called isotacticity index) of greater than about 20%, preferably between 30% and 90% and very preferably between 50% and 85%, measured by the DSC method.

10. Mineral filler masterbatch or concentrate, highly filled with mineral material(s) or filler(s) according to Claim 9, **characterized in that** the mineral filler or fillers, whether treated or not, are chosen from the following: carbonates, such as natural calcium carbonates, including various chalks, calcites and marbles, or from synthetic carbonates, such as calcium carbonates precipitated at various stages of crystallization or else chosen from mixed magnesium calcium salts, such as dolomites, or even from magnesium carbonate and zinc carbonate; lime; magnesia; barium sulphate, such as especially baryta; calcium sulphate; silica; magnesium silicates, such as talc; wollastonite; clays and other aluminosilicates, such as kaolins; mica; oxides or hydroxides of metals or alkaline earths, such as magnesium hydroxide, iron oxides and zinc oxide; glass fibre or powder; wood fibre or sawdust; mineral or organic pigments; or mixtures of these compounds, such as mixtures of talc and carbonates and also mixtures of titanium oxide and carbonates, these mixtures being produced before or after the minerals are milled.

11. Mineral filler masterbatch or concentrate, highly filled with mineral material(s) or filler(s) according to Claim 10, **characterized in that** the mineral filler or fillers, whether treated or not, are chosen from natural calcium carbonates, including various chalks, calcites and marbles, or from synthetic carbonates, such as precipitated calcium carbonates, or else talc, magnesium hydroxide, baryta, titanium dioxide, wollastonite or dolomites, and mixtures thereof.

12. Process for producing thermoplastics filled with mineral filler(s), **characterized in that** a compound is made, in one or more compounding steps, of said thermoplastic(s) with a masterbatch according to any one of Claims 9 to 11, **characterized in that** said thermoplastic or thermoplastics are chosen from linear or branched, low-density polyethylenes, or high-density polyethylenes, polypropylene homopolymers or copolymers, polyisobutylenes and copolymers obtained during the polymerization of at least two of the comonomers ethylene, propylene and isobutylene, polyolefins modified by grafting, such as maleic-anhydride-grafted polyolefins, or modified by copolymerization, such as halogenated polyolefins, EPDM (ethylene-propylene-diene monomer)-modified polypropylenes, SEBS (styrene/ethylene-butylene/styrene)-modified polypropylenes, or else at least two of the aforementioned polymers and copolymers, as a blend, or else rubbers or elastomers, whether natural or synthetic, and thermoplastic rubbers or elastomers, including, among the latter, in particular, thermoplastic SBR (styrene-butadiene rubber) or EPDM or SEBS rubbers.

13. Use of masterbatches according to any one of Claims 9 to 11, optionally in the form of aggregates or granules, for manufacturing moulded industrial articles by thermoforming or injection moulding.

14. Use of masterbatches according to any one of Claims 9 to 11, optionally in the form of aggregates or granules, for the extrusion in particular of films, sheaths or tubes or profiles, or wires and cables, for extrusion blow moulding, for the extrusion of tapes or sheets, or else for extrusion coating on paper or a metal sheet.

15. Use of masterbatches according to any one of Claims 9 to 11, optionally in the form of aggregates or granules, for calendering.

16. Moulded, extruded or calendered objects obtained by using masterbatches according to any one of Claims 9 to 11.

## Patentansprüche

1. Verfahren zur Herstellung von Masterbatches oder Konzentraten von Mineralfüllstoff(en), die stark mit Mineralstoff(en) oder Mineralfüllstoff(en) angereichert sind, die zum Auffüllen von Thermoplasten mit den Mineralfüllstoffen geeignet sind, wobei Polymere oder Gemische von Polymeren als Bindemittel verwendet werden, **dadurch gekennzeichnet, dass** die Polymere oder Gemische von Polymeren:
- mindestens ein isotaktisches Polypropylen von sehr hoher Fluidität umfassen,
- einen prozentualen Kristallinitätsgehalt, der im Allgemeinen Isotaktizitätsindex genannt wird, von über etwa 20 %, vorzugsweise von 30 bis 90 %, besonders bevorzugt von 50 bis 85 %, gemessen durch das DSC-Verfahren, aufweisen, und
- **dadurch** dass der Gehalt an Mineralfüllstoff des Masterbatch über 80 Gew.-% beträgt, und
- **dadurch** dass die Polymere oder Gemische von Polymeren einen Schmelzindex, der auch MFI (Melting Flow Index) genannt wird, von größer oder gleich 200 g/10 min, gemessen nach der modifizierten Norm NF T 51-620 (190 °C - 10 kg - 1,05 mm), aufweisen.

2. Verfahren zur Herstellung von Masterbatches oder Konzentraten von Mineralfüllstoff(en), die stark mit Mineralstoff(en) oder Mineralfüllstoff(en) angereichert sind, nach Anspruch 1, **dadurch gekennzeichnet, dass** die Polymere oder Gemische von Polymeren einen Schmelzindex von größer oder gleich 500 g/10 min, gemessen nach der modifizierten Norm NF T 51-620 (190 °C - 10 kg - 1,05 mm), aufweisen.

3. Verfahren zur Herstellung von Masterbatches oder Konzentraten von Mineralfüllstoff(en), die stark mit Mineralstoff(en) oder Mineralfüllstoff(en) angereichert sind, nach Anspruch 1, **dadurch gekennzeichnet, dass** der organische Teil des Konzentrats von Füllstoffen, d. h. das Gemisch von Polymeren, die das Bindemittel bilden, und gegebenenfalls den üblichen Hilfsstoffen, besteht aus:
- 30 bis 100 % isotaktischem Polypropylen von sehr hoher Fluidität, dessen MFI, gemessen nach der modifizierten Norm NFT 51-620, größer oder gleich 200 g/10 min ist (Temperatur 190 °C, Last 10 kg, Kapillare 1,05 mm);
- 0 bis 70 % amorphen und/oder kristallinen Polyolefinen, ausgewählt aus Polypropylen, Polyethylen und Polymeren oder Copolymeren auf der Grundlage ethylenischer Monomere, die 2 bis 6 Kohlenstoffatome enthalten, allein oder im Gemisch;
- 0 bis 5 % Hilfsstoffen, wie Wärmestabilisatoren, Antioxidantien, UV-Schutzmittel, Dispersionsmittel, Gleitmittel, Farbmittel, Plastifizierer, antistatische Mittel, Flammhemmer, Nukleierungsmittel, Metall-Passivierungsmittel, wie Kupferpassivierungsmittel.

4. Verfahren zur Herstellung von Masterbatches oder Konzentraten von Mineralfüllstoff(en), die stark mit Mineralstoff(en) oder Mineralfüllstoff(en) angereichert sind, nach einem der Ansprüche 1 bis 3, **dadurch gekennzeichnet, dass** das Polymer ein isotaktisches Polypropylen mit sehr hoher Fluidität ist.

5. Verfahren zur Herstellung von Masterbatches oder Konzentraten von Mineralfüllstoff(en), die stark mit Mineralstoff(en) oder Mineralfüllstoff(en) angereichert sind, nach einem der Ansprüche 1 bis 3, **dadurch gekennzeichnet, dass** die Polymere oder das Gemisch von Polymeren aus mindestens einem isotaktischen Polypropylen von sehr hoher Fluidität und mindestens einem anderen olefinischen kristallinen oder amorphen Polymer bestehen.

6. Verfahren zur Herstellung von Masterbatches oder Konzentraten von Mineralfüllstoff(en), die stark mit Mineralstoff(en) oder Mineralfüllstoff(en) angereichert sind, nach Anspruch 5, **dadurch gekennzeichnet, dass** das andere kristalline oder amorphe olefinische Polymer ein Polyethylen ist.

7. Verfahren zur Herstellung von Masterbatches oder Konzentraten von Mineralfüllstoff(en), die stark mit Mineralstoff(en) oder Mineralfüllstoff(en) angereichert sind, nach Anspruch 5, **dadurch gekennzeichnet, dass** die Polymere oder das Gemisch von Polymeren aus einem isotaktischen Polypropylen von sehr hoher Fluidität und einem Polyethylen bestehen.

8. Verfahren zur Herstellung von Masterbatches oder Konzentraten von Mineralfüllstoff(en), die stark mit Mineralstoff(en) oder Mineralfüllstoff(en) angereichert sind, nach einem der Ansprüche 1 bis 2, **dadurch gekennzeichnet, dass** die Polymere oder das Gemisch von Polymeren aus mindestens einem isotaktischen Polypropylen von sehr hoher Fluidität und mindestens einem anderen olefinischen amorphen oder ataktischen oder im Wesentlichen amorphen oder im Wesentlichen ataktischen Copolymer oder Terpolymer bestehen.

9. Masterbatch oder Konzentrat von Mineralfüllstoff(en), das stark mit Mineralstoff(en) oder Mineralfüllstoff(en) angereichert ist, **dadurch gekennzeichnet, dass** es einen Gehalt an Mineralfüllstoff über 80 Gew.-%, vorzugsweise von 80,5 bis 95,0 Gew.-% und besonders bevorzugt von 82,0 bis 93,0 Gew.-% enthält, **dadurch**, dass es einen Schmelzindex oder MFI von größer oder gleich 5 g/10 min (190 °C - 5 kg - 2,09 mm), gemessen nach der Norm NFT 51-620, vorzugsweise von größer oder gleich 8 g/10 min) (190 °C - 5 kg - 2,09 mm) aufweist und **dadurch**, dass es mindestens ein Polymer vom isotaktischen Polypropylentyp von sehr hoher Fluidität enthält, das einen prozentualen Kristallinitätsgehalt (auch Isotaktizitätsindex genannt) von über etwa 20 %, vorzugsweise von 30 bis 90 %, und besonders bevorzugt von 50 bis 85 %, gemessen durch das DSC-Verfahren, aufweist.

10. Masterbatch oder Konzentrat von Mineralfüllstoff(en), das stark mit Mineralstoff(en) oder Mineralfüllstoff(en) angereichert ist, nach Anspruch 9, **dadurch gekennzeichnet, dass** der (die) behandelte(n) oder nicht behandelte(n) Mineralfüllstoff(e) ausgewählt sind aus Carbonaten, wie natürlichen Calciumcarbonaten, aus deren verschiedenen Kreiden, Calciten, Marmorarten, oder aus den synthetischen Carbonaten, wie die in verschiedenen Kristallisationsstadien ausgefällten Calciumcarbonate, oder auch aus den gemischten Calcium-Magnesiumsalzen, wie Dolomite, oder aus Magnesiumcarbonat, Zinkcarbonat, Kalk, Magnesia, Bariumsulfat, wie insbesondere Baryt, Calciumsulfat, Kieselsäureanhydrid, Magnesiumsilicaten, wie Talk, Wollastonit, Tonen und anderen Alumosilicaten, wie Kaoline, Glimmer, Metalloxiden oder Metallhydroxiden oder Erdalkalimetalloxiden oder -hydroxiden, wie Magnesiumhydroxid, Eisenoxide, Zinkoxid, Glasfaser oder Glaspulver, Holzfaser oder Holzpulver, mineralischen oder organischen Pigmenten oder Gemischen dieser Verbindungen, wie die Gemische von Talk und Carbonaten sowie die Gemische von Titanoxid und Carbonaten, ausgewählt sind, wobei die Gemische vor oder nach dem Feinmahlen der Mineralien hergestellt werden.

11. Masterbatch oder Konzentrat von Mineralfüllstoff(en), das stark mit Mineralstoff(en) oder Mineralfüllstoff(en) angereichert ist, nach Anspruch 10, **dadurch gekennzeichnet, dass** der (die) behandelte(n) oder nicht behandelte(n) Mineralfüllstoff(e) aus natürlichen Calciumcarbonaten, aus deren verschiedenen Kreiden, Calciten, Marmorarten, oder aus den synthetischen Carbonaten, wie die ausgefällten Calciumcarbonate, oder auch aus Talk, Magnesiumhydroxid, Baryt, Titandioxid, Wollastonit, oder den Dolomiten und ihren Gemischen ausgewählt sind.

12. Verfahren zur Herstellung von mit Mineralfüllstoff(en) angereicherten Thermoplasten, **dadurch gekennzeichnet, dass** ein Gemisch aus einem oder aus mehreren des/der Thermoplaste mit einem Masterbatch nach einem der Ansprüche 9 bis 11 hergestellt wird, **dadurch gekennzeichnet, dass** das Thermoplast oder die Thermoplaste ausgewählt sind aus linearen oder verzweigten Polyethylenen mit niedriger Dichte oder aus Polyethylenen mit hoher Dichte, homo- oder copolymeren Polypropylenen, Polyisobutylenen und den Copolymeren, die durch Polymerisation von mindestens zwei der Ethylen-, Propylen-, Isobutylen-Comonomeren erhalten werden, den pfropfmodifizierten Polyolefinen, wie die Maleinsäureanhydrid-gepfropften Polyolefine, oder den copolymerisationsmodifizierten Polyolefinen, wie die halogenierten Polyolefine, den EPDM (Ethylen-, Propylen-, Dien-Monomere) modifizierten Polypropylenen, den SEBS (Styrol-, Ethylen-, Butylen-, Styrol-Monomere)-modifizierten Polypropylenen oder aus mindestens zwei der zuvor genannten Polymere und Copolymere im Gemisch oder auch aus den natürlichen oder synthetischen und thermoplastischen Kautschuken oder Elastomeren, und unter diesen letzteren insbesondere aus den SBR-Kautschuken (Styrol-Butadien-Kautschuk) oder den EPDM- oder SEBS-Thermoplasten.

13. Verwendung von Masterbatches nach einem der Ansprüche 9 bis 11, gegebenenfalls in Form von Aggregaten oder Granulatkörnern, zur Herstellung von industriellen Gegenständen, die durch Warmformung oder Injektion geformt werden.

14. Verwendung von Masterbatches nach einem der Ansprüche 9 bis 11, gegebenenfalls in Form von Aggregaten oder Granulatkörnern zur Extrusion und insbesondere in Form eines Films, einer Hülse oder eines Schlauchs oder eines Profils oder von Fäden und Kabeln zur Blasextrusion, Extrusion von Folienbändchen oder Folien- oder auch zur Extrusionsbeschichtung auf Papier oder Metallfolie.

15. Verwendung von Masterbatches nach einem der Ansprüche 9 bis 11, gegebenenfalls in Form von Aggregaten oder Granulatkörnern zur Kalandrierung.

16. Extrudierte oder kalandrierte Formteile, die durch die Herstellung von Masterbatches nach einem der Ansprüche 9 bis 11 hergestellt werden.
